(19) Europäisches Patentamt
European Patent Office
Office européen des brevets

(11) EP 4 454 956 A1

(12) EUROPEAN PATENT APPLICATION
published in accordance with Art. 153(4) EPC

(43) Date of publication:
30.10.2024 Bulletin 2024/44

(21) Application number: 22911335.2

(22) Date of filing: 22.12.2022

(51) International Patent Classification (IPC):
*B60S 1/38* (2006.01)

(52) Cooperative Patent Classification (CPC):
B60S 1/38

(86) International application number:
PCT/JP2022/047313

(87) International publication number:
WO 2023/120633 (29.06.2023 Gazette 2023/26)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 24.12.2021 JP 2021210808
28.01.2022 JP 2022011862

(71) Applicant: CANON KABUSHIKI KAISHA
Tokyo 146-8501 (JP)

(72) Inventors:
- AOYAMA, Takehiko
Tokyo 146-8501 (JP)
- MATSUDA, Hidekazu
Tokyo 146-8501 (JP)
- KODAMA, Katsuya
Tokyo 146-8501 (JP)
- HIGUCHI, Nao
Tokyo 146-8501 (JP)
- MIZUNUMA, Takayuki
Tokyo 146-8501 (JP)

(74) Representative: TBK
Bavariaring 4-6
80336 München (DE)

# (54) WIPER DEVICE

(57) This wiper device can exhibit higher wiping performance than a conventional wiper device. Provided is a wiper device for a windshield, the device comprising a wiper arm, and a wiper blade mounted on the wiper arm, wherein the wiper blade includes a blade rubber and a blade stay which supports the blade rubber. The blade rubber includes: a base part which is a part of the blade rubber to be mounted on the blade stay; a lip part; and a neck part which rockably connects the lip part to the base part, wherein at least a portion of the tip of the lip part constitutes a contact part with a windshield, abuts the wiper arm to a glass flat plate and moves the glass flat plate. In a stop state,the width of the contact part of the blade rubber and the glass flat plate is from 1.0 μm to 20.0 μm, and an angle θ between a specific position of the lip part and the glass flat plate is 20° to 80°.

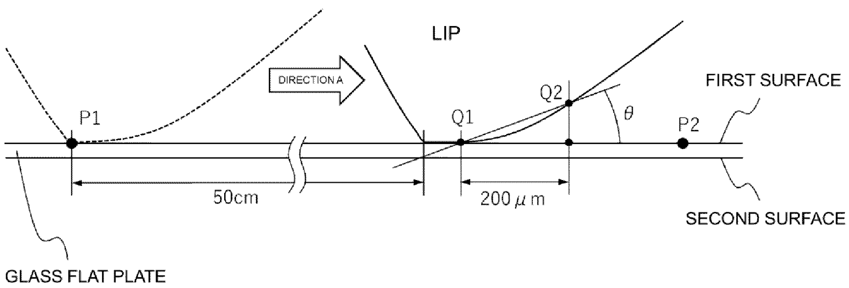


Fig. 5

## Description

### TECHNICAL FIELD

The present disclosure relates to a wiper device that wipes the surface of a windshield of a vehicle or the like.

### BACKGROUND ART

Automobiles, trains, ships, aircrafts, etc. are equipped with cleaning members to wipe away water droplets, dirt and the like adhered to glass surfaces such as a windshield and a rear window to ensure the operator's field of vision.

Among such cleaning members, wiper blades in which a wiper blade rubber is provided on the portion that comes into contact with the glass surface are well known. By moving this wiper blade rubber in close contact with the glass surface, it is possible to wipe away water droplets and the like adhered to the glass surface. From the viewpoint of ensuring good visibility for the operator, wiper blades are desired that are excellent in wiping ability and that can sufficiently wipe away water droplets, dirt, and the like from glass surfaces etc.

PTL 1 discloses a wiper derive including a wiper blade including a base, a neck, and a lip, the lip being spaced apart from the contact surface of the base by a constant gap, having a constant overall lip width in the wiping direction and having a lip tip part that slides on the surface of a windshield panel. This wiper device is provided with a means for setting an angle $\theta$ formed between the windshield panel and the lip to 30 degrees $\leq \theta \leq$ 55 degrees during wiping movement.

### CITATION LIST

### PATENT LITERATURE

[PTL 1] Japanese Patent Application Publication No. H07-246916.

### SUMMARY OF INVENTION

### TECHNICAL PROBLEM

As disclosed in PTL 1, even when the contact angle between the lip of the wiper blade and the surface of the member to be cleaned was controlled to from 30 degrees to 50 degrees, there were cases where the thickness of the water film after wiping was not stable or uneven wiping occurred.

At least one embodiment of the present disclosure is directed toward providing a wiper device that can exhibit higher wiping ability than conventional wiper devices.

### SOLUTION TO PROBLEM

At least one embodiment of the present disclosure is directed toward providing a wiper device for a windshield, wherein

the wiper device comprises a wiper arm and a wiper blade mounted on the wiper arm;
the wiper blade has a blade rubber and a blade stay that supports the blade rubber;
the blade rubber includes a base, which is an attachment part of the blade rubber to the blade stay, a lip, and a neck that swingably connects the lip to the base;
at least a portion of a tip of the lip constitutes a contact part with the windshield;
in a state obtained by setting an arm pressing force of the wiper arm to 18 N/m, bringing the lip of the wiper blade into contact with a first surface of a glass flat plate, moving the wiper blade through 50 cm at a speed of 1.65 m/sec in a direction A from a first base point P1 to a second base point P2 on the first surface of the glass flat plate in a direction orthogonal to a longitudinal direction of the blade rubber, and stopping the wiper blade,
where a contact part of the lip with the glass flat plate is observed from a second surface side opposite to the first surface of the glass plate and a width of the contact part in the direction orthogonal to the longitudinal direction of the blade rubber is taken as contact width A, the contact width A is 1.0 to 20.0 $\mu$m, and where
the blade rubber is observed from a side surface of the blade rubber in the longitudinal direction by using an optical microscope at a magnification of 200 times,
when among the contact parts of the lip with the glass flat plate, the one farthest from the P1 is taken as point Q1, a perpendicular line is dropped to the first surface of the glass flat plate at a position 200 $\mu$m from the point Q1 in the direction A, and an initial intersection of the perpendicular line with the lip is taken as point Q2, an angle $\theta$ formed

between a straight line connecting the point Q1 and the point Q2 and the first surface of the glass flat plate is 20 to 80°.

## ADVANTAGEOUS EFFECTS OF INVENTION

According to at least one embodiment of the present disclosure, it is possible to provide a wiper device that can exhibit that can exhibit higher wiping ability than conventional wiper devices.

## BRIEF DESCRIPTION OF DRAWINGS

[Fig. 1]
Fig. 1 shows an example of contact between a conventional wiper blade and a member to be cleaned.
[Fig. 2]
Fig. 2 is a schematic diagram of a wiper device.
[Fig. 3]
Fig. 3 is a schematic diagram of the cross section of a wiper blade.
[Fig. 4]
Figs. 4(a) and 4(b) are explanatory diagrams showing the state of a blade rubber during the cleaning process.
[Fig. 5]
Fig. 5 is a diagram explaining a contact/movement test of the wiper device.
[Fig. 6]
Fig. 6 is a diagram explaining the angle of a blade rubber tip.
[Fig. 7]
Fig. 7 is an enlarged view of the vicinity of a first edge.
[Fig. 8]
Fig. 8 is an enlarged view of the vicinity of a first line segment.
[Fig. 9]
Fig. 9 is an enlarged view of the vicinity of an observation region 12 with P0 as the center of gravity.
[Fig. 10]
Fig. 10 is a schematic diagram of a testing machine.
[Fig. 11]
Fig. 11 is an explanatory diagram of a wiping performance test.
[Fig. 12]
Fig. 12 is a schematic diagram of the vicinity of the contact portion of the wiper blade with the member to be cleaned.
[Fig. 13]
Fig. 13 is an explanatory diagram of contact width A and contact width B in the present disclosure.

## DESCRIPTION OF EMBODIMENTS

In the present disclosure, the descriptions of "XX or more and YY or less" or "XX to YY" representing numerical ranges mean numerical ranges including the lower and upper limits, which are endpoints, unless otherwise specified. When numerical ranges are stated stepwise, the upper and lower limits of each numerical range can be combined arbitrarily. In addition, in the present disclosure, wording such as "at least one selected from the group consisting of XX, YY and ZZ" means any of: XX; YY; ZZ; a combination of XX and YY; a combination of XX and ZZ; a combination of YY and ZZ; or a combination of XX and YY and ZZ.

The present inventors observed in more detail the state of wiping of the surface of a windshield by the wiper blade according to PTL 1. In particular, the contact area of the wiper blade lip with the windshield was microscopically observed.

As a result, the extreme tip portion of the lip of the wiper blade was curved due to friction with the surface of a glass 101 (hereinafter also referred to as "glass surface"). As shown in Fig. 1, when the wiper blade was moved in a traveling direction P, the contact angle $\theta p$ with the glass at the tip portion of the lip became smaller than the angle specified in PTL 1. Further, the tip portion of the lip was stretched due to friction with the glass surface, and the width (nip width) of the contact portion between the tip portion and the glass surface was increased.

Therefore, it is thought that the pressure with which the wiper blade is pressed against the glass surface (see arrow A) is not as high as intended. In addition, because the contact angle of the tip portion of the lip decreased, as shown in Fig. 1, a force is applied by water that collects between the tip portion and the glass surface in direction B to lift the wiper blade from the glass surface. As a result, the contact pressure of the wiper blade is considered to be weaker.

It is thought that these phenomena cause uneven wiping in the wiper blade.

On the basis of these findings, the inventors recognized that in order to further improve wiping performance, it is necessary to control the contact state of the extreme tip portion of the blade with the surface of the member to be cleaned, which has not been discussed so far.

<Configuration of Vehicle Wiper Blade>

The wiper device according to one embodiment of the present disclosure can be used in equipment such as transportation equipment, for example, vehicles such as automobiles, airplanes, ships, etc. and industrial machinery such as construction machinery. These transportation equipment and industrial machinery are collectively referred to as vehicles. The present disclosure relates to a wiper device for a vehicle windshield. The windshield is not limited to the front window and is also inclusive of side windows and rear windows.

For example, as shown in Fig. 2, the wiper device includes a wiper arm 300 and a wiper blade 200 mounted on the wiper arm 300. The wiper blade 200 includes a blade rubber 100 and a blade stay 210 that supports the blade rubber 100.

As shown in Fig. 3, the blade rubber 100 includes a base 1, which is an attachment part of the blade rubber 100 to the blade stay 210, and a lip 3, which is swingably connected by a neck 2 to the base 1. The wiper blade has a substantially uniform cross-sectional shape in the longitudinal direction.

In the cross section of the wiper blade in the direction perpendicular to the longitudinal direction, the lip 3 includes a shoulder 31 extending laterally from the neck at the end of the lip 3 on the neck side. Further, in order to stabilize the contact posture of the wiper blade, the wiper blade may have a tapered portion 4 that gradually narrows down from the side closer to the base 1 in the direction away from the base 1. Furthermore, the degree of gradual decrease in the width of the tapered portion 4 may be changed in stages. For example, the lip 3 may have a lip tip part where the width of the tapered portion gradually decreases to a smaller extent on the side closer to the tip away from the base 1 of the lip. Further, the lip tip part may have a portion having a width that is the same or substantially the same from the side closer to the base 1 toward the tip. The wiper blade shown in Fig. 3 has a plate-shaped portion continuous with the tapered portion 4 on the tip side of the lip 3.

The wiper device cleans the surface of the member to be cleaned by bringing at least a portion of the tip of the lip 3 into contact with the surface of the windshield, such as a glass surface, which is the member to be cleaned. As a result, at least a portion of the tip of the lip 3 constitutes a contact part with the windshield.

For example, in one embodiment, in a cross section of the wiper blade in a direction perpendicular to the longitudinal direction, the width of the neck 2 may be narrower than that of the base 1 and the lip 3. As a result, as shown in Figs. 4(a) and 4(b), the lip 3 is inclined in the wiping direction, and one side surface of the lip 3 that is continuous with the tapered portion, that is, at least a portion of the tip of a side surface 5 or a side surface 6 contacts the surface of the member to be cleaned.

Figs. 4(a) and 4(b) are explanatory diagrams showing the state of the wiper blade during the cleaning process.

In Fig. 4(a), the lip 3 of the wiper blade has the tapered portion 4. In addition, the lip 3 includes the first side surface 5 and the second side surface 6 opposite to the first side surface 5, the two side surfaces being continuous with the tapered portion 4, and a tip surface 7 that, together with the first side surface 5 and the second side surface 6, constitutes a first edge 8 and a second edge 9 on the side of the lip 3 farthest from the base 1 (as regards the first edge, second edge, and tip surface, see Figs. 3 and 7).

In Fig. 4(b), the lip 3 of the wiper blade has the second side surface 6 that is continuous with the tapered portion 4 and comes into contact with the member to be cleaned 10, the first side surface 5 opposite to the second side surface 6, and the tip surface 7 that, together with the first side surface 5 and the second side surface 6, constitutes the first edge 8 and the second edge 9 on the side of the lip 3 farthest from the base 1 (as regards the first edge, second edge, and tip surface, see Figs. 3 and 7).

Arrow R indicates the cleaning direction of the wiper blade. By reversing the cleaning direction from the direction of arrow R in Fig. 4(a) to the direction of arrow R in Fig. 4(b), the side surface of the lip 3 that is in contact with the member to be cleaned is switched from the tip on the first side surface 5 side to the tip on the second side surface 6 side.

In the present disclosure, the contact state between the member to be cleaned and the wiper device is observed under the following conditions. An overview is illustrated by Fig. 5. First, the arm pressing force of the wiper arm is set to 18 N/m, and the lip of the wiper blade is brought into contact with the first surface of the glass flat plate. Then, observation is performed in a state obtained by moving the wiper blade through 50 cm at a speed of 1.65 m/sec in a direction A from a first base point P1 to a second base point P2 on the first surface of the glass flat plate in the direction orthogonal to a longitudinal direction of the blade rubber and stopping the wiper blade.

The arm pressing force of 18 N/m corresponds to a condition with the highest pressing force per blade length under the test conditions shown in JIS D 5710:1998. Therefore, under such condition, the lip is particularly strongly pressed by wiping, the contact angle is likely to decrease, and the contact width is likely to increase. In addition, the

speed of 1.65 m/sec corresponds to an intermediate speed among the speeds measured at the center of the wiper blade (M zone in JIS D 5710: 1998) of actual cars distributed in Japan.

The contact part of the lip with the glass flat plate is observed from the second surface side opposite to the first surface of the glass plate, and where a width of the contact part in the direction orthogonal to the longitudinal direction of the blade rubber is taken as contact width A, the contact width A is from 1.0 μm to 20.0 μm (see Fig. 13).

With the contact width A within the above range, the wiper blade according to the present disclosure can be excellent in wiping the surface to be cleaned. That is, when the contact width A is 1.0 μm or more, the contact of the tip of the lip 3 with the surface to be cleaned can be further stabilized. In addition, where the contact width A is 20.0 μm or less, it is possible to maintain a high contact pressure per unit area of the contact portion and prevent the occurrence of uneven wiping, provided that the angle θ formed between a specific position of the lip portion and the surface to be cleaned, which will be described hereinbelow, is within a specific range.

Meanwhile, when the contact width A exceeds 20.0 μm, the contact pressure per unit area of the contact portion is likely to decrease, and the blade is likely to be affected by the force of water in the direction of lifting the blade. As a result, water is likely to be scraped and caused to leak downstream in the wiping direction. The contact width A is preferably from 1.1 μm to 15.0 μm, more preferably from 1.2 μm to 10.0 μm, still more preferably from 1.2 μm to 6.5 μm, and even more preferably from 1.2 μm to 5.0 μm.

Further, the standard deviation of the contact width A is preferably 6.00 μm or less, more preferably 4.00 μm or less, still more preferably 2.00 μm or less, even more preferably 1.00 μm or less, and particularly preferably 0.80 μm or less. A smaller standard deviation of the contact width A is preferable, and the lower limit is not particularly limited, but is preferably 0.00 μm or more, more preferably 0.10 μm or more. A preferable range of the standard deviation of the contact width A is from 0.00 μm to 6.00 μm.

Furthermore, a contact width B defined as below is preferably from 1.0 μm to 20.0 μm, more preferably from 1.0 μm to 15.0 μm, and even more preferably from 1.0 μm to 10.0 μm.

That is, the arm pressing force of the wiper arm is set to 10 N/m, and the lip of the wiper blade is brought into contact with the first surface of the glass flat plate. Then, the wiper blade is moved through 50 cm at a speed of 1.65 m/sec in the direction A from the first base point P1 to the second base point P2 on the first surface of the glass flat plate in the direction perpendicular to the longitudinal direction of the blade rubber and stopped. When the contact part of the lip with the glass flat plate is observed from the second surface side opposite to the first surface of the glass plate in the stopped state, the width of the contact part in the direction perpendicular to the longitudinal direction of the blade rubber is taken as the contact width B.

The load dependence of the contact width can be calculated from the contact width A and the contact width B in accordance with the following formula (A).

Load dependence of contact width (μm/(N/m)) = = (Contact width A (μm) - Contact width B (μm))/(Load 18 (N/m) - Load 10 (N/m)) (A)

The load dependence of the contact width calculated in accordance with the formula (A) above is preferably as small as possible, and the lower limit is not particularly limited, but is preferably from 0.01 μm to 0.60 μm, more preferably from 0.01 μm to 0.50 μm, still more preferably from 0.02 μm to 0.30 μm, and even more preferably from 0.02 μm to 0.10 μm. As for the contact state of the wiper blade with the surface to be cleaned, depending on the shape of the surface to be cleaned and the state of the force transmitted from the wiper arm to the lip at the tip of the blade rubber, unevenness may occur in the force applied in the longitudinal direction. By suppressing the load dependence of the contact width within the above range, it becomes possible to stably exhibit wiping performance over the entire length.

Since the load dependence of the contact width is caused by the deformation of the micro-region in response to the load, the load dependence can be controlled by controlling the elastic modulus of the micro-region as shown below.

The load dependence of the contact width A and the contact width B is governed by the effect of deformation in the micro-region in the vicinity of the contact portion with the member to be cleaned. High wiping performance is achieved by suppressing deformation of the lip tip with respect to the pressing force transmitted to the base 1 from the wiper arm 300 and by wiping with a narrow contact width.

As a means for setting the load dependence of the contact width A and the contact width B within the above range, for example, it is effective to increase the elastic modulus of the blade rubber, particularly in the micro-region of the lip 3. By increasing the elastic modulus of the micro-region of the blade rubber, deformation of the tip of the lip 3 due to the contact force can be suppressed. Further, it is possible to prevent the lip tip from being stretched due to friction with the surface to be cleaned. As a result, in the wiping process, the contact width of the lip with the surface to be cleaned can be prevented from increasing. Meanwhile, where the microscopic elastic modulus of the blade rubber is low, the contact width may suddenly increase due to deformation, which is caused by the pressing force, and elongation of the tip of the lip due to friction with the surface to be cleaned during wiping.

Examples of the elastic modulus in the micro-region include an elastic modulus (hereinafter also simply referred to as "elastic modulus") that can be measured with a scanning probe microscope (hereinafter referred to as SPM). In order to control the contact width A within an appropriate range, it is preferable that the elastic modulus of the micro-region be in the range of from 15.0 to 470.0 MPa. The elastic modulus of the micro-region obtained by SPM will be described in detail hereinbelow.

Examples of means for increasing the elastic modulus include increasing the crosslink density and adding a reinforcing additive. In particular, when a urethane resin is used as a constituent material for a blade rubber, the elastic modulus in the micro-region can be controlled within the above range by using the properties of a block copolymer consisting of hard segments and soft segments, which will be described hereinbelow, and designing the crosslinked structure by using a polyfunctional isocyanate or a polyfunctional polyol or by selecting a catalyst. As a result, the contact width can be controlled within an appropriate range, which is preferable.

Furthermore, it is preferable that the contact width in the longitudinal direction of the blade rubber be uniform, and the standard deviation of the contact width A be within the above range. The high uniformity of the contact width A enables wiping without leakage. Where the contact length is not uniform, streak-like leakage may occur starting from the non-uniform portions. The influence of uniformity is particularly noticeable when wiping away stains represented by oil films that have strong adhesion to the member to be cleaned.

An example of an index that influences the standard deviation of the contact width is the coefficient of variation of the elastic modulus in the micro-region shown above. By suppressing the coefficient of variation of the elastic modulus in the micro-region to a small value and increasing the uniformity of the elastic modulus in the micro-region, it is possible to further reduce variations of the contact width A in the longitudinal direction. By suppressing the coefficient of variation of the elastic modulus in the micro-region to a small value, it is possible to suppress unevenness of the contact width A, which is preferable in terms of achieving uniform wiping ability. Specifically, it is preferable that the coefficient of variation of the elastic modulus determined by SPM be 17.6% or less. Details will be explained hereinbelow.

In order to suppress the coefficient of variation of the microscopic modulus of elasticity, it is preferable to use a urethane resin, as it is possible to control the structure at the molecular level and nanoscale level, as compared, for example, to the method of adding a reinforcing additive mentioned hereinabove. It is preferable to further improve the uniformity of the elastic modulus achieved with the urethane resin by using the properties of a block copolymer consisting of hard segments and soft segments, which will be described hereinbelow, and finely dispersing the hard segments.

Further, in the wiper blade according to the present disclosure, the angle θ formed between the glass flat plate and a specific position of the lip observed by the following method is from 20° to 80°.

The arm pressing force of the wiper arm is set to 18 N/m, the lip of the wiper blade is brought into contact with the first surface of the glass flat plate, and the wiper blade is moved through 50 cm at a speed of 1.65 m/sec in the direction A from the first base point P1 to the second base point P2 on the first surface of the glass flat plate and stopped. In this state, the blade rubber is observed from a side surface in the longitudinal direction by using an optical microscope at a magnification of 200 times. Among the contact parts (contact portions) of the lip with the glass flat plate, the one farthest from the P1 is taken as point Q1, a perpendicular line is dropped to the first surface of the glass flat plate at a position 200 μm from the point Q1 in the direction A, and an initial intersection of the perpendicular line with the lip is taken as point Q2. An angle formed between a straight line connecting the point Q1 and the point Q2 and the first surface of the glass flat plate is taken as θ.

The formed angle θ being within the above range indicates that the extreme tip portion of the lip contacts the surface of the member to be cleaned at an angle even in the micro-region. Therefore, the member to be cleaned is less likely to be subjected to vertical force due to wiped water and dirt, and the blade rubber is less likely to be lifted up, so that water and the like present on the member to be cleaned can be sufficiently scraped off.

Where the formed angle θ is less than 20°, the member to be cleaned is more likely to receive vertical force from the wiped water, which makes it easier for the blade rubber to float and results in uneven wiping and leakage.

Meanwhile, when the formed angle θ is large, where a material that is highly deformable by contact is used, the contact state will become unstable, which may result in uneven wiping in the longitudinal direction of the blade rubber or chattering of the blade. When using conventional materials, it was difficult to set the formed angle θ. The design made in conjunction with the contact width enables stable wiping even when the formed angle is increased to the above range. However, even in the present design, where the formed angle θ is too large, the contact state becomes unstable, and uneven wiping in the longitudinal direction of the blade rubber or chattering of the blade may occur.

The formed angle θ is preferably from 40° to 78°, more preferably from 60° to 75°.

For example, three factors can be considered as factors that influence the formed angle θ. The factors are illustrated by Figs. 6(a), 6(b), and 6(c), respectively.

The first factor that affects the formed angle θ is the deformation of the neck portion, which affects the macro-inclination of the blade rubber (Fig. 6(a)). The neck of the wiper blade is deformed and comes into contact with the member to be cleaned in an inclined state. Where the neck deforms and the shoulder contacts the base, changes in the contact posture can be suppressed and stable wiping can be performed. A means for controlling the macro-inclination

of the blade rubber can be exemplified by the adjustment of the length of the neck and the length of the shoulder.

Fig. 6(d) shows schematically the lengths of each part. In Fig. 6(d), NL is the length of the neck in a cross section perpendicular to the longitudinal direction of the blade rubber and may correspond to the distance between the base and the lip. NT is the thickness of the neck, that is, the length of the neck in the direction (hereinafter also referred to as "width direction") along the surface of the member to be cleaned (windshield) that is perpendicular to the longitudinal direction of the blade rubber when the tip of the lip of the blade rubber is brought vertically into contact with the member to be cleaned.

SL is the length from the shoulder tip to the neck in a cross section perpendicular to the longitudinal direction of the blade rubber, that is, the length from the shoulder to the neck in the direction (width direction) along the surface of the member to be cleaned, which is perpendicular to the longitudinal direction of the blade rubber, when the lip tip of the blade rubber is brought vertically into contact with the member to be cleaned (windshield).

In addition, LL is the length of the lip, that is, the length of the lip in the direction (hereinafter also referred to as "height direction") perpendicular to the longitudinal direction of the blade rubber and also perpendicular to the member to be cleaned (windshield). LM is the length of the lip tip part. LT is the thickness of the tip of the lip at the tip surface 7, that is, the length of the tip of the lip in the width direction of the blade rubber. In the blade rubber shown in Fig. 3, LT corresponds to the width of the plate-shaped portion continuous to the tapered portion 4, and LM corresponds to the length (in the height direction) of the plate-shaped part continuous to the tapered portion 4.

Specifically, it is preferable to increase the ratio of the length of the shoulder to the length of the neck. Specifically, by reducing the length of the neck and increasing the length of the shoulder, the macro-inclination of the blade rubber can be increased. However, when the length of the neck is small, deformation in the macro-inclination direction may not be possible and the desired macro-inclination may not be achieved. Therefore, the length NL of the neck is preferably from 200 μm to 1500 μm, more preferably, from 250 μm to 1200 μm.

Increasing the macro-inclination angle acts in the direction of increasing the formed angle θ in the micro-region. In order to set the formed angle θ within the above range, it is preferable to set the ratio (SL/NL) of the length SL of the shoulder to the length NL of the neck in the cross section perpendicular to the longitudinal direction of the blade rubber to a range from 0.37 to 9.00, more preferably from 1.00 to 6.00, still more preferably from 2.00 to 5.00, and even more preferably from 2.50 to 4.00.

The second factor that affects the formed angle θ is the deformation of the blade rubber from the neck to the lip tip (Fig. 6(b)). In addition to the inclination caused by the deformation of the neck described above, the lip deflects due to the pressing force applied from the base. As a result of the deflection of the lip 3, the formed angle θ of the tip becomes smaller. In particular, the elongation of the neck, which has a small length in the longitudinal direction, and the deflection (deformation) of the lip have a large influence. Examples of means for controlling the deflection of the lip include designing the shape of the neck and lip, which are highly deformable, and designing a material with increased tensile strength as the material thereof.

A specific example of the shape-based means is to increase the thickness of the neck and lip. By increasing the thickness NT of the neck, it is possible to suppress the deformation causing stretching in the blade rubber tip direction that is caused by the pressing force, and it becomes easier to control the macro-inclination angle. However, where the thickness NT of the neck is large, the neck will not be able to deform in the macro-inclination direction, and the desired macro-inclination may not be achieved. Therefore, the thickness NT of the neck is preferably 500 μm or less, more preferably from 150 μm to 500 μm, still more preferably from 180 μm to 400 μm, and even more preferably from 200 μm to 350 μm.

Furthermore, by increasing the thickness and decreasing the length of the lip, deflection deformation of the lip can be suppressed. As a result, the formed angle θ and the formed angle θ', which will be described hereinbelow, can be prevented from becoming too small. Specifically, the thickness LT of the tip of the lip is preferably, for example, from 200 μm to 1000 μm, more preferably from 400 μm to 750 μm, and even more preferably from 500 μm to 650 μm. By setting the thickness LT within the above range, it is possible to prevent the lip from becoming excessively rigid, which reduces the followability of the wiper blade to the member to be cleaned in the longitudinal direction.

Further, the length LL of the lip is preferably from 3000 μm to 5000 μm, more preferably from 3600 μm to 4500 μm. The length LM of the lip tip part is preferably from 800 μm to 2000 μm, more preferably from 1000 μm to 1600 μm.

As regards the means based on materials, it is preferable to increase the tensile strength. Specifically, it is preferable that the tensile stress at 50% extension (hereinafter referred to as 50% modulus) of the tip portion of the lip measured with a tensile tester be from 1.8 MPa to 20.0 MPa, more preferably from 2.0 MPa to 15.0 MPa, still more preferably from 3.0 MPa to 14.0 MPa, and even more preferably from 3.5 MPa to 13.5 MPa.

Increasing the crosslink density and adding a reinforcing additive are examples of means for bringing the tensile strength within the above range. However, it is difficult to achieve both the elastic modulus range and tensile strength shown above. In order to achieve this, it is preferable to use a urethane resin, and by controlling the crosslinking state by using a polyfunctional isocyanate or a polyfunctional polyol and by selecting a catalyst, the elastic modulus can be controlled as described above, and the tensile strength can be increased. A specific method can be mentioned that uses

properties of a block copolymer consisting of hard segments and soft segments as will be described hereinbelow.

The third factor that affects the formed angle θ is the deformation of the micro-region where the tip of the lip contacts the member to be cleaned. The deformation of the contact part with the member to be cleaned due to the pressing force and the extension of the lip due to the frictional force between the lip and the surface to be cleaned have a particularly large influence on the value of the formed angle θ. Therefore, in order to set the angle θ within the above range, it is necessary to suppress deformation and extension in the micro-region of the extreme tip portion of the lip.

As described above, the micro-region at the extreme tip of the lip of the wiper blade has a large effect on the wiping ability, so it becomes important to control the deformation of the micro-region, which is the third factor of the three factors described above.

As mentioned above, increasing the elastic modulus in the micro-region is effective as a means for suppressing deformation and extension in the micro-region. By increasing the elastic modulus of the micro-region, deformation due to contact force and extension due to friction force can be suppressed, and the formed angle θ can be prevented from becoming too small. Specifically, it is preferable that the elastic modulus of the blade rubber, particularly the tip of the lip, be in the range of from 15.0 MPa to 470.0 MPa, as measured by the above-mentioned SPM.

Examples of means for increasing the elastic modulus include increasing the crosslink density and adding a reinforcing additive. In particular, when a urethane resin is used, the contact width A can be controlled by controlling the crosslinking state by using a polyfunctional isocyanate or a polyfunctional polyol or by selecting a catalyst, which is preferable. One example is a method of increasing the elastic modulus by using the properties of a block copolymer consisting of hard segments and soft segments, which will be described hereinbelow.

Furthermore, the formed angle θ' measured by changing the conditions as described hereinbelow is preferably from 20° to 85°, more preferably from 30° to 80°, even more preferably from 40° to 78°.

That is, the arm pressing force of the wiper arm is set to 18 N/m, and the lip of the wiper blade is brought into contact with the first surface of the glass flat plate. Then, the wiper blade is moved through 50 cm at a speed of 0.60 m/sec in the direction A from the first base point P1 to the second base point P2 on the first surface of the glass flat plate in the direction orthogonal to the longitudinal direction of the blade rubber and stopped.

The blade rubber of the wiper blade moved and stopped under the above-described conditions is observed from the side surface of the blade rubber in the longitudinal direction by using an optical microscope at a magnification of 200 times.

Among the contact parts of the lip with the glass flat plate, the one farthest from the P1 is taken as point Q1, a perpendicular line is dropped to the first surface of the glass flat plate at a position 200 μm from the point Q1 in the direction A, and an initial intersection of the perpendicular line with the lip is taken as point Q2. At this time, an angle formed between a straight line connecting the point Q1 and the point Q2 and the first surface of the glass flat plate is taken as the formed angle θ'.

The formed angle θ' is the angle obtained when the wiping speed is lower that that used for measuring the formed angle θ, so even if the value is large, the contact state is relatively unlikely to become unstable.

Further, a wiping speed dependence of the formed angle θ calculated from the formed angle θ and the formed angle θ' is calculated in accordance with the following formula (B).

$$\text{Wiping speed dependence of formed angel } \theta\ (\%) = (\text{Formed angle } \theta' - \text{Formed angle } \theta)/\text{Formed angle } \theta \times 100 \qquad \text{(B)}$$

The wiping speed dependence of the formed angle θ is preferably from 0.2% to 18.5%, more preferably from 0.2% to 15.0%, still more preferably from 0.2% to 10.0%, and even more preferably from 0.2% to 5.0%. Most wiper blades wipe in a circular motion, and in that case, the wiping speed in the longitudinal direction often differs. By suppressing the wiping speed dependence of the formed angle θ within the above range, wiping performance can be stably exhibited over the entire length of the wiper blade.

Regarding the wiping speed dependence of the formed angle θ, changes in the formed angle θ caused by macro-deformation can be controlled by the 50% modulus, and changes in the formed angle θ caused by micro-deformation can be controlled by the elastic modulus of the micro-region.

Even when a conventional wiper blade such as the wiper blade according to PTL 1 was used and the angle between the lip and the member to be cleaned was increased macroscopically by a shape-based means illustrated hereinabove, it was found that under the more microscopic observation conditions described in the present disclosure, the extreme tip portion of the lip was curved due to friction with the glass surface, and the contact angle was decreased. Specifically, when the formed angle θ was measured using the conventional wiper blade, the formed angle θ was about 15° to 18°. Furthermore, in the lip of the conventional wiper blade, the contact width increased due to the elongation of the rubber. Thus, with the conventional wiper blades, it is difficult to achieve both the contact width A and the angle θ of the present case, even if the shape and settings are changed. For this reason, the average contact pressure of the

blade rubber is low and the member to be cleaned is easily subjected to a vertical force caused by water, so that floating of the blade rubber is likely to occur. Therefore, with the conventional wiper blades, the idea is to spread a very thin film of water to ensure visibility through the windshield.

Meanwhile, satisfying the above contact width A and the formed angle θ means that the average contact pressure of the blade rubber is high and that the extreme tip portion of the lip is in contact with the member to be cleaned in an upright state. Therefore, a wiper device that satisfies the contact width A and the formed angle θ can scrape off the water film without leaving practically no water on the windshield. Therefore, it becomes possible to exhibit even higher wiping ability than before.

An oil film may be formed on the windshield of a vehicle or the like due to oily pollutants floating in the atmosphere. Such contaminants may be spread across the entire windshield by the wiping action of the wiper, forming an oil film over a wide area. Oil films do not mix well with water, so if the idea is to keep the water film very thin, as with the conventional wiper blades, the water film would turn into droplets, causing diffuse reflection of light, such as glare, and obstructing visibility. In contrast, the wiper device of the present disclosure, which satisfies the contact width A and the formed angle θ, can scrape off almost the entire water film, and can also scrape off not only the water film but also the oil film. Therefore, even higher wiping ability than before can be achieved, and clearer visibility can be ensured regardless of the state of the windshield.

Next, preferred embodiments of the blade rubber in the wiper device will be described. Fig. 7 is an enlarged view of the vicinity of the first edge 8.

As shown in Fig. 7, a first line segment 11 is assumed to be drawn on the first side surface 5 in parallel with the first edge 8 at a distance of 10 μm from the first edge 8 at the tip of the blade rubber that contacts the member to be cleaned. The length of the first line segment is denoted by L1.

Fig. 8 is an enlarged view of the vicinity of the first line segment. As shown in Fig. 8, points at (1/8)L1, (1/2)L1, and (7/8)L1 from one end side on the first line segment 11 are denoted by P0, P1, and P2, respectively.

In this case, three rectangular observation regions 12 are set for which the points P0, P 1, and P2 on the first line segment 11 of the first side surface 5 are respective centers of gravity. One side of each observation region that is parallel to the first line segment has a length of 70 μm and the other side that is perpendicular to the first line segment has a length of 10 μm.

Fig. 9 shows an enlarged view of the vicinity of the observation region 12 with P0 as the center of gravity.

The elastic modulus of the first side surface at each of 70,000 points arranged with a pitch (interval) of 0.1 μm is measured for each of the three observation regions including P1 and P2, similarly to P0 shown in Fig. 9, by using a scanning probe microscope (hereinafter referred to as SPM).

From the viewpoint of appropriately controlling the above-mentioned contact width A and formed angle θ, it is preferable that the average value of a total of 210,000 obtained elastic modulus values be from 15.0 MPa to 470.0 MPa. Further, from the viewpoint of the wiping uniformity, the coefficient of variation of the elastic modulus is preferably 17.6% or less.

Further, similarly to the measurement on the first side surface, a second line segment is assumed to be drawn on the second side surface 6 in parallel with the second edge 9 at a distance of 10 μm from the second edge 9 at the tip of the blade rubber that contacts the member to be cleaned. The length of the second line segment is denoted by L2.

Points at (1/8)L2, (1/2)L2, and (7/8)L2 from one end side on the second line segment are denoted by P3, P4, and P5, respectively.

In this case, three rectangular observation regions are set for which the points P3, P4, and P5 on the second line segment of the second side surface 6 are respective centers of gravity. One side of each observation region that is parallel to the second line segment has a length of 70 μm and the other side that is perpendicular to the second line segment has a length of 10 μm

The elastic modulus of the second side surface at each of 70,000 points arranged with a pitch (interval) of 0.1 μm is measured for each of the three observation regions by using the SPM.

It is preferable that the average value of a total of 210,000 elastic modulus values obtained for the same reason as above be from 15.0 MPa to 470.0 MPa. Further, the coefficient of variation of the elastic modulus is preferably 17.6% or less.

The behavior of the reciprocating wiper blade during cleaning was observed in detail. As a result, it could be confirmed that during cleaning, the wiper blade contacted the member to be cleaned in regions including positions approximately 10 μm from the first edge and the second edge, respectively, on the first side surface and the second side surface. In the wiper device according to the present disclosure, the average value of the elastic modulus in the longitudinal direction of the region that can constitute the contact part with the member to be cleaned and the coefficient of variation of the elastic modulus satisfy predetermined stipulations, so that the wiping performance can be further improved. In addition, by satisfying the stipulations, the contact width A and the formed angle θ become uniform, making it easier to stably satisfy the contact width A and the formed angle θ.

In a wiper device according to one embodiment of the present disclosure, the average value of the elastic

modulus values measured at predetermined locations in the longitudinal direction of regions at positions that are 10 μm from the first edge and the second edge and in the vicinity thereof on the first side surface and the second side surface, which can constitute the contact part that is in contact with the member to be cleaned, is preferably from 15.0 MPa to 470.0 MPa. Further, in measuring the elastic modulus of the first side surface and the second side surface, it is preferable that the coefficient of variation of the elastic modulus be 17.6% or less.

In measuring the elastic modulus of the first side surface and the second side surface, the average value of the elastic modulus values is more preferably from 32.0 MPa to 62.0 MPa, still more preferably from 42.0 MPa to 61.0 MPa, and even more preferably from 45.0 MPa to 60.0 MPa. In measuring the elastic modulus of the first side surface and the second side surface, the coefficient of variation of the elastic modulus is more preferably 6.0% or less, still more preferably 5.0% or less, and even more preferably 4.0% or less. Since the coefficient of variation of the elastic modulus is preferably as small as possible, the lower limit is not particularly limited, but the coefficient is, for example, preferably 0.1% or more.

Where the average value of the elastic modulus values is within the above range, during cleaning, a portion of the side surface of the wiper blade can be brought into contact with the member to be cleaned with a narrow contact width at the formed angle θ over the longitudinal direction of the wiper blade. In other words, it is possible to bring the contact area closer to a line contact, the pressing force is concentrated on the contact area, and it is possible to reliably scrape off the adhered matter from the member to be cleaned, rather than simply wipe or spread the adhered matter. As a result, extremely high wiping ability can be exhibited as compared to the conventional wiper blades.

Furthermore, the fact that the coefficient of variation of the elastic modulus is 17.6% or less means that the elastic modulus of the contact area of the side surface is more uniform or more homogeneous in the longitudinal direction. Therefore, the wiper blade can be stably brought into contact with the member to be cleaned with a narrow contact width over the longitudinal direction thereof. As a result, the cleaning surface of the wiper blade neither undulates nor becomes disarranged in the longitudinal direction of the wiper blade during cleaning, the occurrence of chatter and the like is suppressed, and it is possible to exhibit uniform followability and contact performance with the member to be cleaned. As a result, more excellent wiping performance can be stably exhibited without wiping residues or uneven wiping over the entire length of the wiper blade against highly adhesive dirt such as dust and oil films that adhere to the member to be cleaned.

The coefficient of variation of the elastic modulus is calculated in accordance with the following formula (1).

$$\text{Coefficient of variation (\%)} = \text{(Standard deviation)}/\text{(Average value of elastic modulus values)} \times 100. \qquad \text{Formula (1)}$$

Fig. 12 shows a schematic diagram of the vicinity of the contact part of the wiper blade with the member to be cleaned.

As shown in Fig. 12(a), it is confirmed that with the conventional wiper blade that does not satisfy the contact width A, the formed angle θ, the average value of the elastic modulus, and the coefficient of variation thereof, the side surface is in flat contact (surface contact) with the member to be cleaned. Meanwhile, as shown in Fig. 12(b), in the blade rubber in the wiper device of the present disclosure, the side surface is in edge contact, which is close to linear contact, with the member to be cleaned. It is thought that this difference in the contact state led to the remarkable difference in wiping performance.

The material constituting the lip including the tapered portion is not particularly limited as long as the contact width A and the formed angle θ can comply with the above stipulations. Specifically, for example, it is preferable that the lip contain a polyurethane that excels in mechanical properties and makes it possible to achieve easily the contact width A and the formed angle θ. In addition, a polyurethane can also easily meat the stipulations pertaining to the average value and coefficient of variation of the elastic modulus.

Furthermore, the polyurethane is preferably a polyurethane elastomer. Polyurethane elastomers are mainly obtained from raw materials such as polyols, chain extenders, polyisocyanates, catalysts, and other additives. The polyurethane elastomer is a block copolymer consisting of hard segments and soft segments. The hard segments are generally composed of polyisocyanates and chain extenders including short-chain diols. Meanwhile, the soft segments are generally composed of long-chain polyols such as polyester polyols, polyether polyols, polycarbonate polyols, and polyisocyanates.

For example, properties of a block copolymer consisting of hard segments and soft segments can be used in order to meet the stipulations pertaining to the contact width A and the formed angle θ, as well as the average value of the elastic modulus and the coefficient of variation of the elastic modulus.

Conventional polyurethanes have hard segments in which portions resulting from aggregation derived from urethane bond interactions are in turn further aggregated with each other. The aggregated portions of urethane bond portions have relatively large hard segments that result from such further aggregated. For this reason, according to the studies of the present inventors, wiper blades manufactured using such polyurethanes do not satisfy at least one from

among the contact width A and the formed angle θ, as well as the average value of the elastic modulus and the coefficient of variation of the elastic modulus according to the present disclosure. That is, since conventional polyurethanes have relatively large hard segments, it is difficult to reduce the coefficient of variation of the elastic modulus to 17.6% or less at 210,000 locations observed using the scanning probe microscope according to the present disclosure.

Here, it can also be thought that further aggregation of the aggregated portions of urethane bonds can be suppressed, and the coefficient of variation can be kept small in the case of polyurethanes with a small amount of hard segments themselves. However, in that case, it is difficult to set the average value of the elastic modulus values to 15.0 MPa or more, and it becomes difficult to satisfy the contact width A and the formed angle θ.

The lip satisfying the physical properties according to the present disclosure can be formed, for example, by using a polyurethane in which hard segments are finely and uniformly dispersed. Such a polyurethane will be explained hereinbelow.

Thus, a polyurethane in which the aggregation of hard segments is suppressed and the hard segments are finely and uniformly dispersed can be obtained by using a diisocyanate or a trifunctional or higher polyfunctional isocyanate, and a diol or a trifunctional or higher polyfunctional alcohol in appropriate concentration ranges as the urethane raw materials.

Specifically, for example, it is preferable to use at least one of an alcohol including a trifunctional or higher polyfunctional alcohol and an isocyanate compound including a trifunctional or higher polyfunctional isocyanate as the urethane raw materials.

It is also preferable to use an alcohol including at least one selected from a diol and a trifunctional or higher polyfunctional alcohol and an isocyanate compound including a trifunctional or higher polyfunctional isocyanate as the urethane raw materials.

It is also preferable to use an alcohol including a trifunctional or higher polyfunctional alcohol and an isocyanate compound including a diisocyanate and a trifunctional or higher polyfunctional isocyanate as the urethane raw materials.

In particular, it is preferable to use a trifunctional or higher polyfunctional isocyanate and a trifunctional or higher polyfunctional alcohol as the urethane raw materials.

In a polyurethane obtained as a reaction product of a trifunctional or higher polyfunctional isocyanate and a trifunctional or higher polyfunctional alcohol, molecular orientation is suppressed by steric hindrance, and aggregation of hard segments is more reliably suppressed. Therefore, the polyurethane is suitable for achieving the contact width A and the formed angle θ, as well as the elastic modulus and coefficient of variation according to the present disclosure. Furthermore, when a soft segment portion has, for example, a linear alkylene structure, the crystallinity increases due to stacking of soft segments. As a result, hard segments also become difficult to disperse. Therefore, introducing an alkylene structure having a side chain portion into the soft segment portion is also effective in suppressing the aggregation of hard segments. Specifically, for example, introducing partial structures as shown in the following structural formulas (i) to (iv) into soft segment portions between two urethane bonds is in terms of reducing the hard segments in size.

$-CH_2-CH(CH_3)-CH_2-CH_2-O-$ (i)

$-CH_2-CH_2-CH(CH_3)-CH_2-O-$ (ii)

$-CH_2-CH(CH_3)-O-$ (iii)

$-CH(CH_3)-CH_2-O-$ (iv)

The structures of structural formulas (i) and (ii), which are substantially identical, are produced by ring-opening polymerization of 3-methyltetrahydrofuran. Furthermore, the structures of structural formulas (iii) and (iv), which are substantially identical, are produced by ring-opening polymerization of 1,2-propylene oxide. A urethane resin having these structures between two adjacent urethane bonds can be obtained by reacting a polyether polyol or polyester polyol having these structures with an isocyanate. Here, hard segments are usually difficult to disperse finely when a bifunctional alcohol (diol) and a bifunctional isocyanate (diisocyanate) are used as the urethane raw materials. However, by introducing the above partial structure into the soft segment portions, the hard segments can be finely dispersed even when a diol and a diisocyanate are used as the urethane raw materials. As a result, a polyurethane can be obtained that yields a wiper blade satisfying the parameters according to the present disclosure.

In addition to introducing side chains into soft segment portions mentioned above, a method of using two or more different alcohols with different numbers of carbon atoms in the straight-chain portions as the alcohol of the urethane raw material can be mentioned as a method for suppressing crystallization due to stacking of soft segments and preventing aggregation of hard segments. Although a polyurethane obtained by using two or more types of alcohols with different numbers of carbon atoms in the straight-chain portion has a linear alkylene structure in the soft segment portion, crystallization due to stacking of the soft segments can be suppressed because of the difference in the number of carbon

atoms. Furthermore, because of the difference in the number of carbon atoms in the soft segment portions, aggregation of urethane bond portions is suppressed, thereby preventing aggregation of the hard segments. Therefore, even when a diol having a linear alkylene structure in the molecule and a diisocyanate are used as the urethane raw materials, hard segments can be miniaturized by using multiple types of diols with different numbers of carbon atoms in the linear alkylene structure. As a result, a polyurethane that yields a wiper blade satisfying the parameters according to the present disclosure can be obtained. Examples of multiple types of diols include a combination of polybutylene adipate polyester polyol and polyhexylene adipate polyester polyol.

Examples of the above-mentioned alcohols include the following.

Polyester polyols such as polyethylene adipate polyester polyol, polybutylene adipate polyester polyol, polyhexylene adipate polyester polyol, (polyethylene/polypropylene) adipate polyester polyol, (polyethylene/polybutylene) adipate polyester polyol, (polyethylene/polyneopentylene) adipate polyester polyol, and the like; polycaprolactone-based polyol obtained by ring-opening polymerization of caprolactone; polyether polyol such as polyethylene glycol, polypropylene glycol, and polytetramethylene ether glycol; and polycarbonate diol. These can be used alone or in combination of two or more.

Furthermore, as mentioned above, using two or more types of polyols with different numbers of carbon atoms in the straight-chain portion (alkylene chain) as the alcohol is preferable because a urethane is obtained in which the crystallization of soft segments is inhibited and the aggregation of hard segments is suppressed. In this case, it is preferable to use, for example, at least two selected from the group consisting of polyester polyols such as polyethylene adipate polyester polyol, polybutylene adipate polyester polyol, polyhexylene adipate polyester polyol, (polyethylene/polypropylene) adipate polyester polyol, (polyethylene/polybutylene) adipate polyester polyol, and (polyethylene/polyneopentylene) adipate polyester polyol.

A diol or a trifunctional or higher polyfunctional alcohol that can extend polyurethane elastomer chains can also be used as the chain extender.

Examples of diols include the following.

Ethylene glycol (EG), diethylene glycol (DEG), propylene glycol (PG), dipropylene glycol (DPG), 1,4-butanediol (1,4-BD), 1,6-hexanediol (1,6-HD), 1,4-cyclohexanediol, 1,4-cyclohexanedimethanol, xylylene glycol (terephthalyl alcohol), and triethylene glycol. These can be used alone or in combination of two or more.

Examples of trifunctional or higher polyfunctional alcohols include trimethylolpropane (TMP), glycerin, pentaerythritol (PEN), and sorbitol. These can be used alone or in combination of two or more.

One way to improve the elastic modulus of polyurethane elastomers is to introduce a crosslinked structure. As a method for introducing crosslinking, it is preferable to use a trifunctional or higher polyfunctional alcohol as the chain extender. Furthermore, introduction of a branched structure into a polyurethane by using a trifunctional or higher polyfunctional alcohol can suppress crystallization of the polyurethane and further suppress the aggregation of hard segments. Here, as the polyfunctional alcohol, it is preferable to use a trifunctional alcohol from the viewpoint of suppressing excessive increase in hardness due to an excessively high degree of crosslinking of the polyurethane. Among the trifunctional alcohols, triols having a methylene skeleton next to a hydroxyl group and capable of forming a flexible crosslinked structure in the molecular structure are preferable because such triols have the effect of further suppressing the crystallinity of hard segments. Examples of such triols include trimethylolpropane (TMP) and glycerin.

Examples of the above isocyanate compounds include the following.

4,4'-Diphenylmethane diisocyanate (4,4'-MDI), polymeric MDI, 2,4-tolylene diisocyanate (2,4-TDI), 2,6-tolylene diisocyanate (2,6-TDI), xylene diisocyanate (XDI), 1,5-naphthylene diisocyanate (1,5-NDI), p-phenylene diisocyanate (PPDI), hexamethylene diisocyanate (HDI), isophorone diisocyanate (IPDI), 4,4'-dicyclohexylmethane diisocyanate (hydrogenated MDI), tetramethylxylene diisocyanate (TMXDI), carbodiimide-modified MDI, triphenylmethane-4,4',4"-triisocyanate (TTI), and tris(phenylisocyanate) thiophosphate (TPTI).

Among these, 4,4'-MDI is preferred because the two isocyanate groups thereof have equivalent reactivity, and high mechanical properties can be obtained. Further, it is preferable to use a trifunctional or higher polyfunctional isocyanate in combination. By using a trifunctional or higher polyfunctional isocyanate, a branched structure can be introduced into the polyurethane, which is effective in further suppressing the aggregation of hard segments. Further, since a denser crosslinked structure can be introduced into the polyurethane, the contact property of the lip to the member to be cleaned can be further stabilized. As a result, it becomes possible to more effectively prevent wiping residues and uneven wiping of the member to be cleaned.

Examples of the trifunctional or higher polyfunctional isocyanate include at least those selected from the group consisting of triphenylmethane-4,4',4"-triisocyanate (TTI), tris(phenylisocyanate) thiophosphate (TPTI), and polymeric MDI. Among them, tris(phenylisocyanate)thiophosphate (TPTI) and polymeric MDI can be used more suitably. These isocyanates have a methylene group or an ether group between a plurality of NCO groups, so an appropriate distance can be maintained between a plurality of urethane bonds. Therefore, these isocyanates are advantageous in terms of suppressing the aggregation of hard segments.

Here, polymeric MDI is represented by the following Chemical Formulas (1) and (1)'. In Chemical Formula (1)',

n is preferably from 1 to 4. Chemical formula (1) corresponds to a case where n is 1 in Chemical Formula (1)'.

[C1]

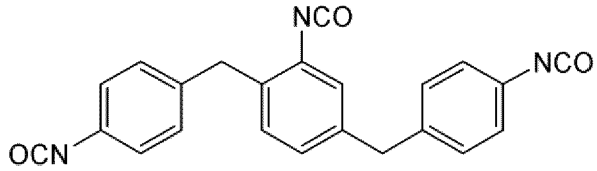

(1)

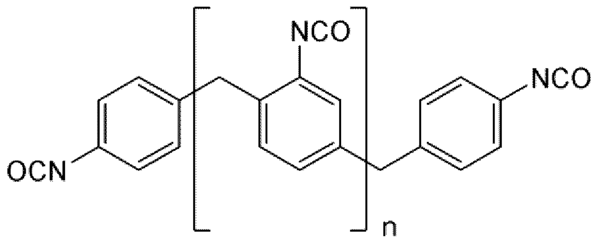

(1)'

In the case where the lip according to the present disclosure includes a polyurethane that is a reaction product of a raw material composition including an isocyanate compound including a diisocyanate and a trifunctional or higher polyfunctional isocyanate, and an alcohol including a trifunctional or higher polyfunctional alcohol, the lip preferably has the following physical properties.

That is, respective line segments are assumed to be drawn on the first side surface and the second side surface of the lip in parallel with the first edge and the second edge at a distance of 0.5 mm from the first edge and the second edge. The length of each line segment is denoted by L', and points at 1/8L', 1/2L', and 7/8L' from one end side on the line segment are denoted by P0', P1', and P2', respectively.

Samples sampled at each of the P0', P1', and P2' on the first side surface and the second side surface are heated to 1000°C at a temperature rise rate of 10°C/s in a mass spectrometer of a direct sample introduction system in which a sample is heated and vaporized in an ionization chamber to ionize sample molecules. The detected amount of all ions obtained as a result is denoted by M1, and the integrated intensity of a peak in an extracted ion thermogram corresponding to a range of m/z value derived from the trifunctional or higher polyfunctional isocyanate is denoted by M2. At this time, M2/M1 of the first side surface and/or the second side surface is preferably from 0.0010 to 0.0150. M2/M1 is particularly preferably from 0.0030 to 0.0150.

Further, where M3 is the integrated intensity of a peak in an extracted ion thermogram corresponding to a range of m/z value derived from a diisocyanate, M3/M1 at the first side surface and/or the second side surface is preferably from 0.0200 to 0.1100, and particularly preferably from 0.0380 to 0.0760. By setting M2/M1 and M3/M1 within the above ranges, an appropriate amount of a structure with low crystallinity that is derived from the trifunctional or higher polyfunctional isocyanate is introduced into the polyurethane, and as a result, the aggregation of hard segments is suppressed, and hard segments can be dispersed more finely and more uniformly. In addition, excessive development of the crosslinked structure in the polyurethane can be suppressed, and the contact width A and the formed angle θ can be easily controlled. Further, the average value of the elastic modulus can be easily adjusted within the range of from 15.0 MPa to 470.0 MPa.

Further, it is preferable that M2/M3 be from 0.0130 to 0.3000. Herein, M2/M3 is a parameter representing the ratio of a structural portion derived from a diisocyanate and a structural portion derived from a trifunctional or higher polyfunctional isocyanate in the structure derived from an isocyanate in the polyurethane, and by setting M2/M3 within the above range, it is possible to obtain a polyurethane in which excessive increase in elastic modulus can be suppressed and the aggregation of hard segments can be further suppressed.

Here, where the polyurethane is produced using a polymeric MDI represented by Chemical Formula (1)' above, as a trifunctional or higher polyfunctional isocyanate, M2 may be set to a sum of integrated intensities of peaks corresponding to each of a range where an m/z value derived from n = 1 is from 380.5 to 381.5, a range where an m/z value derived from n = 2 is from 511.5 to 512.5, a range where an m/z value derived from n = 3 is from 642.5 to 643.5, and a range where m/z value derived from n = 4 is from 773.5 to 774.5 in the structure represented by Chemical Formula (1)' in an extracted ion thermogram obtained by mass spectrometry described above.

In addition, where the polyurethane is produced using 4,4'-MDI shown by Chemical Formula (2), as a diisocyanate as one of the raw materials, M3 may be set to the integrated intensity of a peak corresponding to a range where

an m/z value derived from the structure represented by Chemical Formula (2) is from 249.5 to 250.5 of in an ion thermogram obtained by the mass spectrometry described above.

[C2]

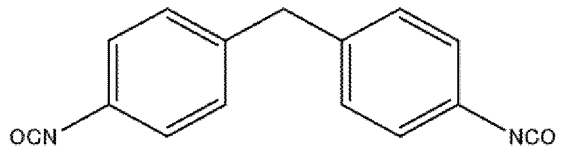

(2)

Furthermore, where the lip of the wiper device according to one embodiment of the present disclosure includes a polyurethane that is a reaction product of a raw material composition that includes an isocyanate compound including a trifunctional or higher polyfunctional isocyanate and an alcohol including a trifunctional or higher polyfunctional alcohol, the lip preferably has the following physical properties. That is, respective line segments are assumed to be drawn on the first side surface and the second side surface of the lip in parallel with the first edge and the second edge at a distance of 0.5 mm from the first edge and the second edge. The length of each line segment is denoted by L', and points at 1/8L', 1/2L', and 7/8L' from one end side on the line segment are denoted by P0', P1', and P2', respectively. Samples sampled at each of the P0', the P1', and the P2' of the first side surface and the second side surface are measured by pyrolysis GC/MS (gas chromatography and mass spectrometry). The concentration of the component derived from the trifunctional or higher polyfunctional alcohol in the polyurethane is preferably from 0.04 mmol/g to 0.39 mmol/g, more preferably from 0.14 mmol/g to 0.39 mmol/g, and even more preferably from 0.22 mmol/g to 0.39 mmol/g.

Where the concentration of the component derived from the trifunctional or higher polyfunctional alcohol is 0.04 mmol/g or more, the aggregation of hard segments in the polyurethane can be suppressed more reliably. In addition, by setting the concentration of the component derived from the trifunctional or higher polyfunctional alcohol to 0.39 mmol/g or less, excessive development of the crosslinked structure in the polyurethane can be suppressed, and the elastic modulus can be prevented from becoming too high. Therefore, the tapered portion having the above-described physical properties can more easily satisfy the above stipulations pertaining to the aforementioned contact width, formed angle $\theta$, the average value of the elastic modulus, and the coefficient of variation of the elastic modulus. The concentration of the trifunctional or higher polyfunctional alcohol in the polyurethane is calculated in accordance with the following formula (2).

Concentration of trifunctional or higher polyfunctional alcohol (mmol/g) = [Amount of trifunctional or higher polyfunctional alcohol (g)/Amount of molecular weight of trifunctional or higher polyfunctional alcohol $\times$ 1000]/[Mass of polyurethane (g)]    Formula (2):

The urethane raw material can include a catalyst for promoting the reaction of the isocyanate compound and the alcohol. Commonly used catalysts for curing polyurethane elastomers, such as tertiary amine catalysts and tertiary amino alcohols, can be used as the catalyst, and specific examples thereof include the following.

Amino alcohols such as dimethylethanolamine, N,N,N'-trimethylaminopropylethanolamine, and N,N'-dimethylhexanolamine; trialkylamines such as triethylamine; tetraalkylkamines such as N,N,N'N'-tetramethyl-1,3-butanediamine; triethylenediamine, piperazine compounds, and triazine compounds.

Examples of tertiary amino alcohols include 2-(dimethylamino)ethanol, 3-(dimethylamino)propanol, 2-(dimethylamino)-1-methylpropanol, 2-{2-(dimethylamino)ethoxy}ethanol, 2- f 2-(diethylamino)ethoxy}ethanol, and 2-[{2-(dimethylamino)ethyl}methylamino]ethanol.

In addition, organic acid salts of metals, such as potassium acetate and alkali potassium octylate, can also be used. Furthermore, metal catalysts commonly used for urethanization, such as dibutyltin dilaurate, can also be used. These can be used alone or in combination of two or more.

Among them, with a temperature-sensitive catalyst such as 2-{2-(diethylamino)ethoxy}ethanol and 2-[{2-(dimethylamino)ethyl}methylamino]ethanol, the aforementioned polyfunctional isocyanates can be reacted with polyols with extremely high efficiency, and it is possible to better form a high-order crosslinked structure in the polyurethane.

The raw materials constituting the blade rubber may be blended, as necessary, with additives such as pigments, plasticizers, waterproofing agents, antioxidants, ultraviolet absorbers, light stabilizers, and hydrolysis inhibitors, within ranges in which no adverse effect is produced on the contact width A and the formed angle $\theta$.

<Surface Treatment>

The lip of the blade rubber, including at least the tapered portion, may be subjected to a surface treatment such as electron beam irradiation, ultraviolet irradiation, surface layer coating, surface hardening treatment, etc. Preferred surface treatment methods in the present disclosure include, for example, (i) a method including a step of irradiating an object to be treated with ultraviolet rays, and (ii) a method including a step of applying a material for forming a cured region to an object to be treated, and curing the material.

However, since, as shown above, deformation in the macro- to micro-region contributes to performance, more effective influence is exerted by performing the design preceding surface treatment as described above and then performing surface treatment.

(i) The conditions for irradiating with ultraviolet rays are not particularly limited. The ultraviolet rays may have a wavelength of 400 nm or less, but preferably have a wavelength of 200 nm or more. Where the wavelength of the ultraviolet rays is 200 nm or more, the elastic modulus can be increased effectively. Preferably, the wavelength of the maximum emission peak of light emitted by a light source is from 200 nm to 400 nm. Particularly preferably, the wavelength of the maximum emission peak is in the vicinity of 254 nm, for example, in the range of 254 $\pm$ 1 nm. That is because ultraviolet rays in the above wavelength range, or of the above wavelength, can efficiently generate active oxygen that modifies the surface of the tapered portion of the wiper blade. When a plurality of emission peaks of ultraviolet light is present, it is preferable that one of the peaks be present in the vicinity of 254 nm.

The intensity of the light emitted from the light source is not particularly limited, and values measured using a spectral irradiance meter (trade name: USR-40V/D, manufactured by Ushio Inc.), ultraviolet integrating light meter (trade names: UIT-150-A, UVD-S254, VUV-S172, and VUV-S365, manufactured by Ushio Inc.), and the like can be used. Further, the integrated light quantity of ultraviolet light radiated onto the lip in the surface treatment step may be selected, as appropriate, depending on the effect of the surface treatment that is to be obtained. This can be done by determining the irradiation time with light from the light source, the output of the light source, the distance from the light source, and the like, and these parameters may be determined so as to obtain a desired integrated light quantity, for example, such as 10000 mJ/cm$^2$.

The integrated light quantity of ultraviolet light radiated onto the lip can be calculated by the following method.

Integrated light quantity of ultraviolet light (mJ/cm$^2$) = Ultraviolet light intensity (mW/cm$^2$ $\times$ Irradiation time (sec)

For example, a high-pressure mercury lamp or a low-pressure mercury lamp can be suitably used as the light source for emitting ultraviolet light. These light sources are preferable because they can stably emit ultraviolet light of a suitable wavelength with little attenuation caused by the irradiation distance, and the entire surface can be uniformly irradiated.

(ii) The conditions for applying and curing a material for forming a cured region are not particularly limited. The cured region can be formed in the lip by applying and curing a material for forming the cured region. This treatment can effectively increase the elastic modulus of the portion where the material for forming the cured region is applied and cured. It is preferable that the cured region be formed on at least both the first and second side surfaces of the lip that come into contact with the member to be cleaned.

The material for forming a cured region can be used after being diluted, as necessary, with a diluting solvent, and can be applied by known means such as dipping, spraying, dispenser coating, brushing, roller coating, or the like. Further, after applying the material for forming the cured region, a treatment such as a heating treatment may be further performed. The material for forming the cured region may be impregnated into the polyurethane contained in the lip. Since the impregnation is promoted by making the material for forming a cured region high in concentration and low in viscosity, the material for forming a cured region may be impregnated by heating without being diluted. The degree of curing may be adjusted by adjusting the temperature of the material for forming the cured region, the impregnation or immersion time, the heat treatment temperature and heat treatment time after impregnation or immersion, a subsequent standing time, and the like.

The temperature of the material for forming the cured region is preferably about 60°C to 90°C. Further, the impregnation or immersion time cannot be uniquely determined, but ranges preferably from about 10 sec to 180 sec. After applying the material for forming the cured region to the cured region, a heating treatment may be performed. The heating treatment reduces the viscosity of the material for forming the cured region that is present at the surface of the polyurethane, thereby making it possible to promote penetration and diffusion into the interior of the polyurethane.

Examples of the heating method include passing through a heating furnace and blowing heated air, but these examples are not particular limiting. Examples of heating furnaces include radiant heating furnaces and circulating air

heating furnaces, and examples of devices that generate heated air include hot air blowers, far-infrared heaters, and the like.

By setting the heating conditions to a high temperature and/or for a long time, the cured region becomes wider. As for the heating conditions, it is preferable that the surface temperature of the treated surface be, for example, from 90°C to 110°C. Further, the heating time is preferably, for example, from 10 min to 60 min.

Furthermore, the amount of residual isocyanate at the time of polyurethane molding tends to gradually decrease with the passage of time after molding.

Therefore, the formation of the cured region may be carried out immediately after molding of the polyurethane, but this condition is not particularly limiting. For example, the cured region may be formed within 3 h after molding of the polyurethane. The amount of residual isocyanate can also be adjusted by the mixing ratio of the composition used when forming the polyurethane.

The material for forming the cured region is not particularly limited as long as it allows the polyurethane to be cured, and a cured region can be formed at the surface of the polyurethane.

Examples include isocyanate compounds and acrylic compounds. The material for forming the cured region may be diluted with a solvent or the like. The solvent to be used for dilution is not particularly limited as long as the material used can be dissolved, and examples thereof include toluene, xylene, butyl acetate, methyl isobutyl ketone, methyl ethyl ketone, and the like.

When the constituent material of the lip of the wiper blade is a polyurethane, it is more preferable to use an isocyanate compound, which is a constituent material of polyurethanes, as the material for forming the cured region, considering compatibility with the material of the lip and impregnability therein. As the isocyanate compound, those having one or more isocyanate groups in the molecule can be used.

As the isocyanate compound having one isocyanate group in the molecule, aliphatic monoisocyanates such as octadecyl isocyanate (ODI), aromatic monoisocyanates such as phenyl isocyanate (PHI), and the like can be used.

As an isocyanate compound having two isocyanate groups in the molecule, those usually used in the production of polyurethane resins can be used, and specifically, the following can be mentioned: 2,4-tolylene diisocyanate (2,4-TDI), 2,6-tolylene diisocyanate (2,6-TDI), 4,4'-diphenylmethane diisocyanate (MDI), m-phenylene diisocyanate (MPDI), tetramethylene diisocyanate (TMDI), hexamethylene diisocyanate (HDI), isophorone diisocyanate (IPDI), and the like.

In addition, as an isocyanate compound having three or more isocyanate groups in the molecule, for example, 4,4',4"-triphenylmethane triisocyanate, 2,4,4'-biphenyltriisocyanate, 2,4,4'-diphenylmethane triisocyanate, and the like can be used.

Furthermore, the isocyanate compounds having two or more isocyanate groups can also be used in the form of modified derivatives and multimers thereof. In order to efficiently increase the elastic modulus of the cured region, it is preferable to use MDI having high crystallinity, that is, a symmetrical structure. Furthermore, MDI containing a modified substance is liquid at normal temperature and, therefore, preferable from the standpoint of workability.

<Method for Producing Blade Rubber>

A method for producing the blade rubber is not particularly limited, and can be selected from well-known methods. For example, a lip having a tapered portion can be obtained by injecting a polyurethane elastomer raw material composition into a cavity in a mold for blade rubber and curing the composition by heating. The tip of the tapered portion may be shaped by cutting. Doing so is preferable because the first edge and the second edge can be molded with high smoothness. Wiper blades may also be prepared by preparing a pair of tandem-shaped molded products in which the tapered portions are in contact with each other while facing each other, and cutting the molded products in the longitudinal direction. Further, the base and the neck may be produced using conventionally known materials and production methods.

<Wiper Device>

A wiper device includes, for example, a wiper arm linked to a drive motor (not shown) and a wiper blade mounted on the wiper arm. The wiper device is not particularly limited, and a known configuration can be adopted. For example, there are various types of wiper devices such as a tandem type and a facing wiping type.

The configuration of the wiper blade is not particularly limited, and any known wiper blade can be used. The wiper blade includes a blade rubber and a blade stay that supports the blade rubber. Various types of blade stays can be adopted, such as a flat type and a tournament type. In a flat blade, the blade stay is a support that holds the blade rubber over entire length thereof and has, for example, spring elasticity.

A backing blade may be attached to the blade rubber and used in order to ensure uniform contact in the longitudinal direction.

Examples

The present disclosure will be explained below with reference to Production Examples, Working Examples and Comparative Examples, but the present disclosure is not limited in any way by these examples. Reagents or industrial chemicals were used as raw materials other than those shown in Examples and Comparative Examples. In addition, all "parts" in Examples and Comparative Examples are based on mass unless otherwise specified.

In Examples and Comparative Examples, wiper blades were produced and evaluated. The formulations and evaluation results of Examples and Comparative Examples are shown in Tables 3 to 9.

[Example 1]

<Preparation of Raw Materials for Wiper Blades>

A total of 191.1 g of 4,4'-diphenylmethane diisocyanate (trade name: Millionate MT, manufactured by Tosoh Corporation) (hereinafter referred to as 4,4'-MDI, simply referred to as "MDI" in the tables), 210.0 g of polymeric MDI (trade name: Millionate MR-200, manufactured by Tosoh Corporation) (hereinafter referred to as MR200) as a trifunctional or higher polyfunctional isocyanate, and 598.9 g of polybutylene adipate polyester polyol (trade name: Nippolan 3027, manufactured by Tosoh Corporation) (hereinafter referred to as PBA2500) having a number-average molecular weight of 2500 were reacted at 80°C for 3 h to obtain a prepolymer with an NCO content of 10.2% by mass.

Subsequently, a curing agent was prepared by mixing the components shown in Table 1 below.

[Table 1]

Table 1

| Material | Content |
|---|---|
| Trimethylolpropane (manufactured by Tokyo Kasei Kogyo Co., Ltd.) (hereinafter referred to as "TMP") as a trifunctional or higher polyfunctional alcohol | 41.6 g |
| Polyhexylene adipate polyester polyol (trade name: Nippolan 164, manufactured by Tosoh Corporation, number-average molecular weight 1000) (hereinafter referred to as "PHA1000") | 235.7 g |
| Polycat 46 (trade name, manufactured by Air Products Japan, Inc.) | 0.14 g |
| 2-[{2-(dimethylamino)ethyl}methylamino]ethanol (trade name TOYOCAT-RX5, manufactured by Tosoh Corporation) (hereinafter referred to as "RX5") | 0.44 g |

This curing agent was added to the aforementioned prepolymer and mixed to obtain a raw material composition. This raw material composition was injected into a mold for molding a wiper blade and cured at a temperature of 130°C for 2 min. Thereafter, a polyurethane molded product was obtained by demolding. A mold release agent A was applied in advance to the inside of the mold for molding a wiper blade. The mold release agent A is a mixture of materials listed in Table 2 below.

[Table 2]

Table 2

| Material | Content |
|---|---|
| "ELEMENT 14PDMS1000-JC" (trade name, manufactured by Momentive Performance Materials, Inc.) | 5.06g |
| "ELEMENT 14PDMS10K-JC" (trade name, manufactured by Momentive Performance Materials, Inc.) | 6.19g |
| "SR1000" (trade name, manufactured by Momentive Performance Materials, Inc.) | 3.75g |
| "EXXSOL DSP1451160 (trade name, manufactured by Andoh Parachemie Co., Ltd.) | 85g |

The tip side of the lip of the obtained polyurethane molded body was cut to obtain a wiper blade according to the present example. The distance in the longitudinal direction of the wiper blade was 700 mm. As shown in Fig. 3, the cross-sectional shape of the wiper blade had a plate-shaped portion connected to the tapered portion 4 on the tip side of the lip 3. Table 3 shows the length NL and thickness NT of the neck, the length SL of the shoulder, and the lengths LM and LL and the thickness LT of the lip. The obtained wiper blade was evaluated by the following methods.

[Method for Measuring 50% Modulus of Lip]

The tip portion of the lip (in the case where the lip has a lip tip part with a changed tapered shape, the lip tip part) was cut out (about 100 mm in the longitudinal direction) from the wiper blade, and the thickness and width of the cut-out piece were measured. The cut-out piece was measured using a tensile tester (trade name: RTG-1225, manufactured by A&D Co., Ltd.) in accordance with JIS K6254-1993. The measurement conditions were a tensile speed of 500 mm/min, a distance between gauge lines of 20 mm, a test temperature of 25°C, and 3 cycles of measurement. The average value of the three measurement results was taken as the 50% modulus. The results are shown in Table 3.

[Method for Measuring Contact Width A and Formed Angle θ]

(Contact/Movement Test Against Flat Glass Plate)

The lip of the blade rubber attached to the arm was brought into contact with the first surface on the glass flat plate. The blade rubber to be attached was prepared by cutting the blade rubber produced as described above to prepare a blade rubber test piece with a longitudinal length adjusted to 15 mm. The blade rubber test piece was gripped in such a way that the base of the blade rubber test piece was sandwiched in order to have a shape that imitated the gripping portion of a vehicle wiper. The blade rubber test piece was moved in a direction perpendicular to the longitudinal direction of the blade rubber to sweep the glass flat plate with the lip and then stopped. The contact posture of the wiper blade at the time of sweeping was evaluated by observing the blade rubber in a stopped state.

Fig. 10 shows an example of a schematic diagram of the test machine used for evaluation. This test machine has a mechanism that can control the pressing force applied to a blade rubber test piece and enables stable contact with the glass flat plate and wiping thereof at a specified speed. The test machine uses a balance system, and the pressing force can be controlled by changing the load applied by the weight.

As shown in Figs. 10 and 5, the lip of the blade rubber test piece was brought into contact with the first surface of the glass flat plate with a pressing force of 18 N/m (longitudinal length) acting on the blade rubber test piece, and the wiper blade was moved through 50 cm at a speed of 1.65 m/sec in the direction A from the first base point P1 to the second base point P2 on the first surface of the glass flat plate in the direction perpendicular to the longitudinal direction of the blade rubber and stopped. The contact posture at the time of wiping the glass flat plate under the following certain conditions was evaluated by observing the stopped state.

A total of 10 equal test pieces were obtained from the blade rubber and evaluated by sampling the test pieces for each of 10 equal portions obtained by dividing the blade rubber to be evaluated in the longitudinal direction.

[Wiping Conditions]

Arm pressing force: 18 N/m (18 N per 1 m length)
Wiper blade test piece length: 15 mm
Glass flat plate moving speed: 1.65 m/sec
Sweeping distance: 50 cm

(Measurement of Contact Width)

In the contact/movement test with respect to the glass flat plate, the contact part of the lip with the glass flat plate was observed in a stopped state after sweeping by using a microscope (confocal microscope (trade name: OPTELICS HYBRID, manufactured by Lasertec Corp.)) from the second surface side of the glass plate, which is opposite to the first surface. The observation conditions were a 20x objective lens and 1024 × 1024 pixels. Observations were performed at intervals of 1 mm from the end in the longitudinal direction of the contact part of the blade rubber test piece and the glass flat plate. For the 10 test pieces, the contact width, which is the distance, in the direction perpendicular to the direction of movement, between the most upstream point and the most downstream point of the zone in contact with the glass surface, was measured at 10 points in the longitudinal direction from the observation image of the field of view

at each observation point. The average value of a total of 100 points was calculated. This average value was taken as the contact width A.

In addition, the standard deviation of the values measured at 100 points was calculated and was taken as the standard deviation of the contact width A, which indicates the unevenness of the contact width.

In addition, the contact width B was measured in the same manner as above, except that the arm pressing force was changed to 10 N/m, and the result was taken the contact width B. The ratio of the amount of change in contact width to the amount of change in arm pressing force was calculated. This value is shown in Table 3 as the load dependence of the contact width.

(Measurement of Formed Angle θ)

In the above-described contact/movement test against the glass flat plate, the blade rubber was observed from the longitudinal side of the blade rubber in a stopped state after sweeping in a still image at a magnification of 200 times by using an optical microscope (camera unit (trade name: high-speed color camera unit VW-600C, Keyence Corporation), high-speed microscope (trade name: High Speed Microscope VW-9000, manufactured by Keyence Corporation), and zoom lens (trade name: Long-Distance High-Performance Zoom Lens VH-Z50L, manufactured by Keyence Corporation)).

As shown in Fig. 5, among the contact parts of the lip with the glass flat plate, the one farthest from the P1 was taken as point Q1, and a perpendicular line was dropped to the first surface of the glass flat plate at a position 200 μm from the point Q1 in the direction A. Where the initial intersection of the perpendicular line with the lip was taken as point Q2, an angle θ formed between a straight line connecting the point Q1 and the point Q2 and the first surface of the glass flat plate was evaluated. Ten test pieces were similarly evaluated, and the average value was taken as the formed angle θ.

In addition, the formed angle θ' was measured in the same manner as above, except that the glass flat plate moving speed was changed to 0.60 m/sec as the wiping condition. The ratio (%) of the difference between the formed angle θ at a glass flat plate moving speed of 1.65 m/sec and the formed angle θ' at a glass flat plate moving speed of 0.60 m/sec to the formed angle θ at a glass flat plate moving speed of 1.65 m/sec was calculated. Table 3 shows this value as the wiping speed dependence of the formed angle θ.

[Method for Measuring Polyfunctional Alcohol Species and Concentration]

Polyfunctional alcohols were detected by pyrolysis GC/MS (gas chromatography and mass spectrometry). The measurement conditions are shown below.

Sampling positions: respective line segments were assumed to be drawn on the first side surface and the second side surface of the lip in parallel with the first edge and the second edge at a distance of 0.5 mm from the first edge and the second edge. The length of each line segment was denoted by L', and points at 1/8L', 1/2L', and 7/8L' from one end side on the line segment were denoted by P0', P1', and P2', respectively. Samples sampled at each of the P0', the P1', and the P2' of the first side surface and the second side surface were measured by the following method. In the sampling, members such as polyurethane were cut using a biocutter.

Device:

- Pyrolysis device: trade name: EGA/PY-3030D, manufactured by Frontier Laboratories Ltd.
- Gas chromatography device: TRACE 1310 gas chromatograph, manufactured by Thermo Fisher Scientific Inc.
- Mass spectrometer: ISQLT, manufactured by Thermo Fisher Scientific Inc.
- Pyrolysis temperature: 500°C
- GC column: stainless steel capillary column having 0.25 mm inner diameter × 30 m
- Stationary phase: 5% phenylpolydimethylsiloxane
- Temperature rise conditions: holding at 50°C for 3 min and raising the temperature to 300°C at 8°C/min
- MS conditions: mass number range m/z from 10 to 650
- Scanning speed: 1 sec/scan

Polyfunctional alcohol species were qualitatively characterized by GC/MS. A calibration curve was created through GC analysis of known concentrations of qualitatively characterized polyfunctional alcohol species, and the species were quantified on the basis of GC peak area ratios. The arithmetic mean value of numerical values obtained for each sample at the above P0', P1', and P2' at the first side surface and the second side surface was taken as the concentration of polyfunctional alcohol at the first side surface and second side surface, respectively.

[Measurement of M1, M2 and M3]

Herein, M1 to M3 were measured using a direct sample introduction method (DI method) in which the sample is directly introduced into an ion source, without passing through a gas chromatograph (GC).

An ion trap-type GC/MS (trade name: POLARIS Q, manufactured by Thermo Fisher Scientific Inc.) was used as the device, and a direct exposure probe (DEP) was used as a direct introduction probe.

In respective line segments assumed to be drawn on the first side surface and the second side surface of the lip in parallel with the first edge and the second edge at a distance of 0.5 mm from the first edge and the second edge, the length of each line segment was denoted by L', and points at 1/8L', 1/2L', and 7/8L' from one end side on the line segment were denoted by P0', P 1', and P2', respectively.

Samples sampled at each of the P0', P1', and P2' at the first side surface and the second side surface were measured by the following method. In the sampling, members such as polyurethane were cut using a biocutter.

Approximately 0.1 μg of each of the samples sampled at each of the P0', P1', and P2' at the first side surface and the second side surface were fixed to a filament located at the tip of the probe, and inserted directly into an ionization chamber. This was followed by rapid heating from room temperature to 1000°C at a constant temperature rise rate (about 10°C/s), and the vaporized gas was detected using a mass spectrometer.

The sum of the integrated intensities of all peaks in the obtained total ion current thermogram was taken as a detected amount M1 of all ions.

Where the sum of the integrated intensities of the peaks in an extracted ion thermogram of m/z value derived from the trifunctional or higher polyfunctional isocyanate was denoted by M2, (M2/M1) was calculated using the values of M1 and M2. When the sum of the integrated intensities of the peaks in an extracted ion thermogram of m/z value derived from the diisocyanate was denoted by M3, (M3/M1) was calculated using the values of M1 and M3. The arithmetic mean values of numerical values obtained from each sample at P0', P1', and P2' at the first side surface and the second side surface were taken as values of (M2/M1) and (M3/M1) of the first side surface and second side surface, respectively.

Here, in the present example, TTI used as a trifunctional or higher polyfunctional isocyanate has a structure shown by the following Chemical Formula (3). In the extracted ion thermogram obtained in the present evaluation, there was detected a peak derived from a cationized product of TTI that had a peak top at an m/z position from 366.5 to 367.5. Therefore, in the present example, the integrated intensity of this peak was taken as M2.

[C3]

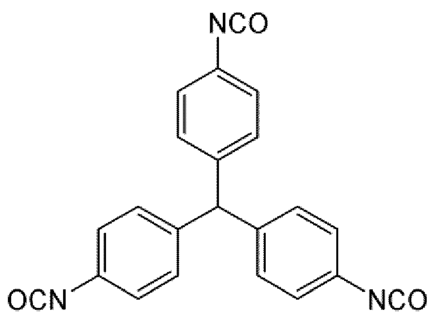

(3)

For the elastic part composed of a polyurethane synthesized using polymeric MDI as the trifunctional or higher polyfunctional isocyanate in another Example described hereinbelow, the peaks derived from cationized products of polymeric MDI and having peak tops at positions in a range where an m/z value showing n = 1 was from 380.5 to 381.5, a range where an m/z value showing n = 2 was from 511.5 to 512.5, a range where an m/z value showing n = 3 was from 642.5 to 643.5, and m/z value showing n = 4 was from 773.5 to 774.5 of the structure represented by the above-mentioned Chemical Formula (1)' were detected in an extracted ion thermogram obtained in the present evaluation. Accordingly, in the above example, the sum of the integrated intensities of those peaks was taken as M2.

Tris(phenylisocyanate) thiophosphate (TPTI) similarly used as a trifunctional or higher polyfunctional isocyanate in the Example described below has a structure shown by Chemical Formula (4). In the extracted ion thermogram obtained in the present evaluation, a peak derived from a cationized product of TPTI and having a peak top at an m/z position from 464.5 to 465.5 was detected. Therefore, in that Example, the integrated intensity of the peak was taken as M2.

[C4]

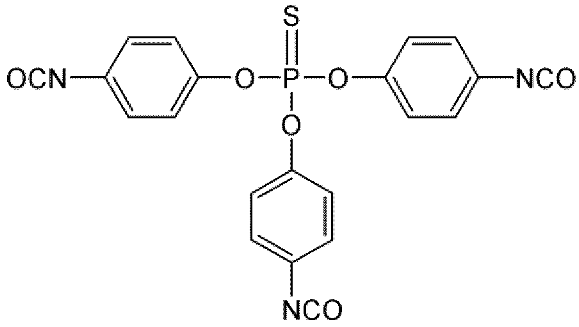

(4)

Meanwhile, in the case of 4,4'-MDI, which is a diisocyanate, the cationization product of the structure shown by Chemical Formula (2) was detected in the range from 249.5 to 250.5 of the m/z of the structure represented by Chemical Formula (2). The integrated intensity of the peak of the extracted ion thermogram corresponding to this structure was taken as (M3).

[Method for Measuring Elastic Modulus]

The elastic modulus by SPM was measured by the following method using a scanning probe microscope (SPM) (trade name: MFP-3D-Origin, manufactured by Oxford Instruments plc).

Firstly, samples were prepared as follows. For the obtained wiper blade, as shown in Fig. 7, a first edge formed by the first side surface and the tip surface was set, the first line segment having a length L1 and located at a distance of 10 μm from the first edge was assumed to be drawn parallel to the first edge, and three square measurement samples were cut out that had a 2-mm one side parallel to the first line segment and had points P0, P1, and P2 at 1/8L, 1/2L, and 7/8L from one end of the line segment as the respective centers of gravity. Next, a cryomicrotome (UC-6 (trade name), manufactured by Leica Microsystems GmbHB) was used to cut out a square polyurethane thin piece having a thickness of 1 μm from each measurement sample at - 50°C, the thin pieces having a 100-μm one side parallel to the first line segment and having points P0, P1, and P2 as centers of gravity. In this way, three measurement samples were prepared. Each of the obtained measurement samples was placed on a smooth silicon wafer and allowed to stand for 24 h in an environment at a room temperature of 25°C and a humidity of 50%.

Next, the silicon wafer carrying the measurement sample was set on the SPM stage, and SPM observation was performed. The spring constant and proportionality constant of a silicon cantilever (trade name: OMCL-AC160, manufactured by Olympus Corp., radius of curvature of tip: 8 nm) were confirmed in advance to be as follows by using a thermal noise method installed in this SPM device (spring constant: 30.22 nN/nm, proportionality constant: 82.59 nm/V).

In addition, the cantilever was tuned in advance, and the resonance frequencies of the cantilever were determined (285 KHz (first order) and 1.60 MHz (high order)).

The SPM measurement mode was AM-FM mode, the free amplitude of the cantilever was 3 V, the set point amplitude was 2 V (first order) and 25 mV (high order), the field of view was 70 μm × 70 μm, and scanning was performed under the conditions of the scan speed of 1 Hz and the number of scan points of 256 vertically and 256 horizontally to obtain a phase image. The field of view was selected such that P0, P1, and P2 of each measurement sample were located in the center of the field of view, and one side was parallel to the first line segment.

From the obtained phase image, the location in the measurement sample where the elastic modulus was to be measured by force curve measurement was designated. Specifically, as shown in Figs. 8 and 9, in a phase image of 70 μm × 70 μm, the measurement locations were designated at positions corresponding to 70,000 points arranged at a pitch (interval) of 0.1 μm in the vertical and horizontal directions in the rectangular observation regions for which the points P0, P1, and P2 are respective centers of gravity, one side of each region having a length of 70 μm and being parallel to the first line segment and the other side having a length of 10 μm and being perpendicular to the first line segment.

Thereafter, the force curve measurement in contact mode was performed once at all points. The force curve was acquired under the following conditions. In the force curve measurement, a piezo element that was the driving source of the cantilever was controlled so that the tip of the cantilever came into contact with the sample surface and jumped back when the deflection reached a certain value. The jump-back point at this time is called the trigger value and indicates an increase in the voltage from the deflection voltage corresponding to the start of the force curve at which the cantilever jumps back. In the present measurement, the force curve measurement was performed with the trigger value set to 0.2 V. As for the other force curve measurement conditions, the distance from the position of the tip of the cantilever in a standby state to the point at which the cantilever jumps back at the trigger value was 500 nm, and the scan speed was 1 Hz (the speed at which the probe reciprocated once). Thereafter, the force curves obtained were

fitted one by one based on the Hertz theory, and the elastic modulus was calculated. The elastic modulus (Young's modulus) according to Hertz theory is calculated in accordance with the following formula (* 1).

Calculation formula (*1)

$$F = (4/3)E^*R^{1/2}d^{3/2}$$

Here, F is the force exerted on the sample by the cantilever at the point in time at which the cantilever jumps back, E* is the composite modulus of elasticity, R is the radius of curvature (8 nm) of the tip of the cantilever, and d is the amount of deformation of the sample at the point in time at which the cantilever jumps back.
Then, d was calculated from the following calculation formula (*2).

Calculation formula (*2)

$$d = \Delta z - D.$$

Herein, $\Delta z$ is the amount of displacement of the piezoelectric element from the point in time at which the tip of the cantilever contacts the sample until the tip jumps back, and D is the amount of warpage of the cantilever at the point in time at which the cantilever jumps back. Further, D was calculated in accordance with the following calculation formula (*3).

Calculation formula (*3)

$$D = \alpha - \Delta Vdeflection$$

In the calculation formula (*3), $\alpha$ is the proportionality constant (involute constant) of the cantilever, and $\Delta$Vdeflection represents the amount of change in deflection voltage from the time the cantilever starts contacting the sample until the point in time at which the cantilever jumps back.
Furthermore, F was calculated in accordance with the following calculation formula (*4).

Calculation formula (*4)

$$F = \kappa - D$$

Herein, $\kappa$ is the spring constant of the cantilever.
Since $\Delta$Vdeflection and $\Delta z$ are actually measured values, E* in formula (* 1) was determined from formulas (* 1) to (*4). Furthermore, the required elastic modulus (Young's modulus) Es was calculated in accordance with the following formula (*5).

Calculation formula (*5)

$$1/E^* = [(1 - Vs^2)/Es] - [(1 - Vi^2)/Ei]$$

Vs: Poisson's ratio of the sample (fixed at 0.33 in the present example);
Vi: Poisson's ratio of the cantilever tip (the value of silicon was used in the present example);
Ei: Young's modulus of the cantilever tip (the value of silicon was used in the present example).

The elastic modulus was measured at 70,000 points arranged with a pitch (interval) of 0.1 μm in the vertical and horizontal directions in the rectangular observation regions (three observation regions of 10 μm × 70 μm) which had P0, P1, and P2 as respective centers of gravity and in which one side was parallel to the first line segment and had a length of 70 μm and the other side perpendicularly intersected the first line segment and had a length of 10 μm. The average value of the elastic modulus values calculated from force curves for 210,000 points was taken as the elastic modulus of the first side surface.

In addition, a standard deviation was calculated from the elastic moduli of a total of 210,000 points. The coefficient of variation of elastic modulus of the first side surface was calculated from the average value and standard deviation of the elastic modulus values in accordance with the following formula 1.

$$\text{Coefficient of variation (\%)} = \text{standard deviation/average value of elastic modulus values} \times 100. \qquad \text{Formula (1)}$$

The average value of the elastic modulus of the second side surface and the coefficient of variation of the elastic modulus of the second side surface were calculated in the same manner as above. The results are shown in Table 3.

<Evaluation of Water Wiping Performance>

The wiping performance of the wiper blade was evaluated using a test device for wiping performance test described in Japanese Industrial Standards (JIS) D5710:1998 (Automotive Parts - Wiper arms and wiper blades). In this test, a backing blade was mounted on the wiper blade, the wiper blade was attached, water droplets were applied by spraying to the entire surface to be wiped on the glass surface, which was the member to be cleaned, and cleaning was performed under the following conditions.

After sweeping the wiper blade once along the forward path (the direction in which the first side surface wipes the glass surface), the unwiped state on the glass surface was confirmed by bringing water-sensitive test paper (trade name: Water-Sensitive Test Paper 20301) into contact with the wiped surface. The water-sensitive test paper used had a long side length of 76 mm and a short side length of 52 mm. When the center part in the longitudinal direction of the wiper blade 200 was placed on the glass surface 220 at the central position in the wiping direction of the wiping region, the test paper was brought into contact so that the long side of the water-sensitive test paper was in the longitudinal direction of the wiper blade (A in Fig. 11(a)).

Using a video microscope (trade name: DIGITAL MICROSCOPE VHX-5000, manufactured by Keyence Corporation) and a zoom lens (trade name: Swing Head Zoom Lens VH-ZST, manufactured by Keyence Corporation), the water-sensitive test paper brought into contact with the wiped surface was observed at an observation magnification of 50 times. There were a total of 24 observation points, 8 points on the long side × 3 points on the short side of the water-sensitive test paper, as shown in Fig. 11(b). From the observed image, the ratio of the area of the surface area that was not discolored by water ((surface area of the portion that was not discolored by water)/(surface area of observation region at a magnification of 50 times) × 100) was calculated, and the average value (hereinafter referred to as water film removal area ratio (%)) for 24 observed locations was calculated.

Similarly, the unwiped state on the glass surface after wiping once along the return path (the direction in which the second side surface wipes the glass surface) was confirmed by bringing water-sensitive test paper into contact with the wiped surface.

The wiping performance was evaluated on the basis of the calculated water film removal area ratio using the following evaluation criteria. The results of the initial evaluation using these results as the initial wiping performance are shown in Table 3 as the wiping performance of the wiper blade.

In addition, in the same manner as above, for forward and return paths, the water-sensitive test paper 230 was brought into contact with five points evenly distributed from the inside end to the outside end in the longitudinal direction of the wiper blade, as shown in Fig. 11(a), at the center of each wiping region in the wiping direction, and the water film removal area ratio was calculated in the same manner. The difference between the maximum and minimum values were calculated from the water film removal area ratios at a total of 10 points (5 points from each of the forward and return paths), the percentage (%) to the average value was evaluated as the dispersion of wiping performance, and unevenness of wiping performance was evaluated according to the following evaluation criteria.

[Wiping Conditions]

Wiping environment: temperature 20 ± 5°C, humidity 70% or more
Determination time: within 3 sec after wiping
Wiper blade length: 700 mm
Load applied to wiper blade: 18 N/m
Wiper blade wiping reciprocating speed: 55 reciprocations/min (1.65 m/sec in M zone)
Water application: water droplets are spread on the entire surface of the glass in the form of a mist.

[Water Wiping Performance Evaluation Criteria]

Rank A: water film removal area ratio is 95% or more
Rank B: water film removal area ratio is 90% or more and less than 95%
Rank C: water film removal area ratio is 85% or more and less than 90%
Rank D: water film removal area ratio is 80% or more and less than 85%
Rank E: water film removal area ratio is less than 50%

[Water Wiping Performance Unevenness Evaluation Criteria]

Rank A: dispersion in wiping performance is less than 3%
Rank B: dispersion in wiping performance is 3% or more and less than 10%
Rank C: dispersion in wiping performance is 10% or more and less than 20%
Rank D: dispersion in wiping performance is 20% or more and less than 40%
Rank E: dispersion in wiping performance is 40% or more

<Evaluation of Oil Film Wiping Performance>

The wiping performance of the wiper blade was evaluated using a test device for wiping performance test described in Japanese Industrial Standard (JIS) D5710:1998 (Automotive parts - Wiper arms and wiper blades). In this test, a wiper blade was attached and silicone oil (trade name: KF-96-50cs, manufactured by Shin-Etsu Chemical Co., Ltd.) was applied to the entire surface to be wiped to simulate an oil film on the glass surface, which was the member to be cleaned. Cleaning was performed under the following conditions.

After one reciprocation of the wiper blade, the unwiped state on the glass surface was observed from the rear side of the cleaned surface, and the influence on gloss unevenness and visibility were assessed visually. The results were calculated as the ratio (hereinafter referred to as silicone oil film removal area ratio (%)) of the surface area from which the silicone oil film was removed to the surface area of the surface wiped by the wiper blade.

The wiping performance was evaluated on the basis of the calculated oil film removal area ratio according to the following criteria. The results are taken as the initial wiping performance. The results are shown in Table 3 as the oil film wiping performance of the wiper blade.

[Wiping Conditions]

Load applied to wiper blade: 18 N/m
Wiping reciprocating speed of wiper blade: 55 reciprocations/min (1.65 m/sec in M zone)

[Evaluation Criteria]

Rank A: silicone oil film removal area rate is 95% or more
Rank B: silicone oil film removal area rate is 90% or more and less than 95%
Rank C: silicone oil film removal area rate is 85% or more and less than 90%
Rank D: silicone oil film removal area rate is 80% or more and less than 85%
Rank E: silicone oil film removal area rate is 70% or more and less than 80%
Rank F: silicone oil film removal area ratio is less than 50%

[Examples 2 to 19]

Wiper blades was prepared and evaluated in the same manner as in Example 1, except that the types and amounts used of various materials for the prepolymer, the types and amounts used of various materials for the curing agent, and the wiper shape were as shown in Tables 3 and 4.

The following materials were used.

The materials used are as follows.

MDI: 4,4'-diphenylmethane diisocyanate (trade name: Millionate MT, manufactured by Tosoh Corporation) (hereinafter referred to as 4,4'-MDI, simply referred to as "MDI" in the tables)
TTI: triphenylmethane-4,4',4"-triisocyanate (trade name: Ultite Super CA, manufactured by Toho Kasei Kogyo Co., Ltd.)
TPTI: tris(phenylisocyanate) thiophosphate (trade name: Ultite Super CAII, manufactured by Toho Kasei Kogyo Co., Ltd.)
Glycerin: (manufactured by Tokyo Kasei Kogyo Co., Ltd.)
TMP: trimethylolpropane (manufactured by Tokyo Kasei Kogyo Co., Ltd.)
PEN: pentaerythritol (manufactured by Tokyo Chemical Industry Co., Ltd.)
MR200: polymeric MDI (trade name: Millionate MR-200, manufactured by Tosoh Corporation)
MR400: polymeric MDI (trade name: Millionate MR-400, manufactured by Tosoh Corporation)
M-200: polymeric MDI (trade name: Cosmonate M-200, manufactured by Mitsui Chemicals, Inc.)
PBA2500: polybutylene adipate polyester polyol having a number-average molecular weight of 2500 (trade name: Nippolan 3027, manufactured by Tosoh Corporation)
PBA1000: polybutylene adipate polyester polyol (trade name: Nippolan 4009, manufactured by Tosoh Corporation)
PBA2000: polybutylene adipate polyester polyol having a number-average molecular weight of 2000 (trade name: Nippolan 4010, manufactured by Tosoh Corporation)
PHA1000: polyhexylene adipate polyester polyol (trade name: Nippolan 164, manufactured by Tosoh Corporation, number-average molecular weight 1000)
PHA2600: polyhexylene adipate polyester polyol having a number-average molecular weight of 2600 (trade name: Nippolan 136, manufactured by Tosoh Corporation,)
PTG-2000SN: polytetramethylene ether glycol having a number-average molecular weight of 2000 (trade name: PTG-2000SN, manufactured by Hodogaya Chemical Industry Co., Ltd.)
PTG1000SN: polytetramethylene ether glycol having a number average molecular weight of 1000 (trade name: PTG-1000SN, manufactured by Hodogaya Chemical Industry Co., Ltd.)
1,4-BD: 1,4-putanediol (manufactured by Tokyo Chemical Industry Co., Ltd.)
Polycat 46: (trade name, manufactured by Air Products Japan, Inc.)
No. 25: N,N'-dimethylhexanolamine (trade name Kaolizer No. 25, manufactured by Kao Corporation)
RX5:P 2-[{2-(dimethylamino)ethyl}methylamino]ethanol (trade name TOYOCAT-RX5, manufactured by Tosoh Corporation)

[Example 20]

A 2-mm tip of the lip of a wiper blade prepared in the same manner as in Example 14 was immersed for 90 sec in 4,4'-MDI melted at a temperature of 80°C. Thereafter, 4,4'-MDI adhering to the surface of the immersed portion of the wiper blade was wiped off using a sponge soaked in butyl acetate, followed by heating at a temperature of 100°C for 30 min. Thereafter, aging was performed for 24 h in an environment of a temperature of 23°C and a relative humidity of 50% to form a cured region at the tip of the lip. In this way, a wiper blade according to the present example was obtained. This wiper blade was evaluated in the same manner as in Example 1.

[Example 21]

A wiper blade prepared in the same manner as in Example 19 was provided with a cured region at the tip of the lip in the same manner as in Example 20. In this way, a wiper blade according to the present example was prepared. This wiper blade was evaluated in the same manner as in Example 1.

[Example 22]

A 2-mm tip of the lip of a wiper blade prepared in the same manner as in Example 18 was immersed for 90 sec in 4,4'-MDI melted at a temperature of 80°C. Thereafter, 4,4'-MDI adhering to the surface of the immersed portion of the wiper blade was wiped off using a sponge soaked in butyl acetate. Thereafter, aging was performed for 24 h in an environment of a temperature of 23°C and a relative humidity of 50% to form a cured region at the tip of the lip. In this way, a wiper blade according to the present example was prepared. This wiper blade was evaluated in the same manner as in Example 1.

[Example 23]

A wiper blade was prepared in the same manner as in Example 19. Next, the lip of this wiper blade was irradiated with ultraviolet rays so that the integrated light quantity of ultraviolet light was 492 mJ/cm$^2$ to obtain a wiper blade according to the present example. As the ultraviolet light source, a low-pressure mercury ozone-less lamp (manufactured by Toshiba Lighting & Technology Co., Ltd.) having a maximum emission wavelength peak at a wavelength of 254 nm was used. This wiper blade was evaluated in the same manner as in Example 1.

[Example 24]

A wiper blade was prepared in the same manner as in Example 13. Next, the lip of this wiper blade was irradiated with ultraviolet rays so that the integrated light quantity of ultraviolet light was 1968 mJ/cm$^2$ to obtain a wiper blade according to the present example. As the ultraviolet light source, a low-pressure mercury ozone-less lamp (manufactured by Toshiba Lighting & Technology Co., Ltd.) having a maximum emission wavelength peak at a wavelength of 254 nm was used. This wiper blade was evaluated in the same manner as in Example 1.

[Example 25]

A wiper blade was prepared in the same manner as in Example 18. Next, the lip of this wiper blade was irradiated with ultraviolet rays so that the integrated light quantity of ultraviolet light was 3936 mJ/cm$^2$ to obtain a wiper blade according to the present example. As the ultraviolet light source, a low-pressure mercury ozone-less lamp (manufactured by Toshiba Lighting & Technology Co., Ltd.) having a maximum emission wavelength peak at a wavelength of 254 nm was used. This wiper blade was evaluated in the same manner as in Example 1.

[Example 26]

A total of 75.0 parts by mass of carbon black (trade name: TOKA BLACK #7360SB, manufactured by Tokai Carbon Co., Ltd.), 5.0 parts by mass of zinc oxide (trade name: Zinc White Type 2, manufactured by Sakai Chemical Industries, Ltd.), and 1.0 part by mass of zinc stearate (trade name: SZ-2000, manufactured by Sakai Chemical Industries, Ltd.) were added to 100 parts by mass of acrylonitrile butadiene rubber (hereinafter referred to as NBR) (trade name: JSR NBR N220S, manufactured by JSR Corporation), and kneading was performed for 15 min in a closed-type mixer adjusted to 50°C.

To this, 2.6 parts by mass of sulfur and 4.5 parts by mass of tetrabenzylthiuram sulfide (TBzTD) (trade name: Perkacit TBzTD, manufactured by Flexsys) were added as vulcanizing agents. Next, kneading was performed for 10 min using a two-roll mill cooled to a temperature of 25°C to obtain a rubber composition. The obtained rubber composition was placed in a mold for wiper blade molding and vulcanized by heating at a temperature of 170°C for 20 min. Thereafter, the molded body was removed to obtain a wiper blade according to the present example. The obtained wiper blade was evaluated in the same manner as in Example 1.

[Comparative Example 1]

A total of 50.0 parts by mass of carbon black (trade name: TOKA BLACK #7360SB, manufactured by Tokai Carbon Co., Ltd.), 5.0 parts by mass of zinc oxide (trade name: Zinc White Type 2, manufactured by Sakai Chemical Industries, Ltd.), 1.0 part by mass of zinc stearate (trade name: SZ-2000, manufactured by Sakai Chemical Industries, Ltd.), and 25 parts by mass of calcium carbonate (trade name: Nanox #30, manufactured by Maruo Calcium Co., Ltd.) were added to 100 parts by mass of natural rubber, and kneading was performed for 15 min in a closed-type mixer adjusted to 50°C.

To this, 1.2 parts by mass of sulfur and 4.5 parts by mass of tetrabenzylthiuram sulfide (TBzTD) (trade name: Perkacit TBzTD, manufactured by Flexsys) were added as vulcanizing agents. Next, kneading was performed for 10 min using a two-roll mill cooled to a temperature of 25°C to obtain a rubber composition. The obtained rubber composition was placed in a mold for wiper blade molding and vulcanized by heating at a temperature of 170°C for 20 min. Thereafter, the molded body was removed to obtain a wiper blade according to the present comparative example. The obtained wiper blade was evaluated in the same manner as in Example 1.

[Comparative Example 2]

The rubber composition obtained in the same manner as in Comparative Example 1 was used and a wiper blade was prepared and evaluated in the same manner as in Comparative Example 1, except that the wiper shape was

as shown in Table 6.

Compared to Comparative Example 1, although the macro-contact posture was upright, the deformation was large in the micro-region, the contact width increased, and the formed angle θ was also small. Therefore, no improvement in performance was observed.

[Comparative Examples 3 and 4]

Wiper blades were produced and evaluated in the same manner as in Comparative Example 1, except that the rubber composition obtained in the same manner as in Example 26 was used and the wiper shape was as shown in Table 6.

In Comparative Example 3, chatter was confirmed during wiping, and periodic leakage of water and oil film was accordingly confirmed.

In Comparative Example 4, floating occurred due to water and oil film during wiping, and leakage was accordingly confirmed.

The evaluation results of wiper blades according to each Example and Comparative Example are shown in Tables 3 to 6.

[Table 3]

Table 3

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Formulation | Prepolymer | Amount of MDI (g) | 191.1 | 216.3 | 216.3 | 216.3 | 195.7 | 195.7 | 191.1 | 191.1 | 164.0 | 164.0 |
| | | Type of trifunctional or higher polyfunctional isocyanate | MR200 | TPTI | TPTI | TPTI | MR400 | MR400 | MR200 | MR200 | TTI | TTI |
| | | Amount of trifunctional or higher polyfunctional isocyanate (g) | 210.0 | 210.0 | 210.0 | 210.0 | 210.0 | 210.0 | 210.0 | 210.0 | 220.0 | 220.0 |
| | | Type of polyol | PBA2500 | PBA2500 | PBA2500 | PBA2500 | PBA2500 | PBA2500 | PBA2500 | PBA2500 | PBA2500 | PBA2500 |
| | | Amount of polyol (g) | 598.9 | 573.7 | 573.7 | 573.7 | 594.3 | 594.3 | 598.9 | 598.9 | 616.0 | 616.0 |
| | Curing agent | Type of trifunctional or higher polyfunctional alcohol | TMP | PEN | TMP | TMP | TMP | TMP | Glycerin | Glycerin | PEN | PEN |
| | | Amount of trifunctional or higher polyfunctional alcohol (g) | 416 | 34.1 | 44.5 | 445 | 559 | 559 | 421 | 42.1 | 305 | 30.5 |
| | | Type of polyol | PHA1000 | PHA1000 | PHA1000 | PHA1000 | PHA1000 | PHA1000 | PHA1000 | PHA1000 | PHA1000 | PHA1000 |
| | | Amount of polyol (g) | 235.7 | 128.4 | 252.4 | 252.4 | 317.0 | 317.0 | 379.3 | 379.3 | 274.7 | 274.7 |
| | | Amount of 1,4-BD (g) | 0.0 | 0.0 | 0.0 | 0.0 | 0.0 | 0.0 | 0.0 | 0.0 | 0.0 | 0.0 |
| | | Amount of Polycat 46 (g) | 0.14 | 013 | 0.14 | 0.14 | 0.15 | 0.15 | 0.15 | 0.15 | 0.14 | 0.14 |
| | | No.25 (g) | 0.00 | 0.00 | 0.00 | 0.00 | 0.00 | 0.00 | 0.00 | 0.00 | 0.00 | 0.00 |
| | | RX5 (g) | 0.44 | 040 | 045 | 045 | 048 | 048 | 049 | 049 | 0.45 | 0.45 |
| Post-treatment | | | - | - | - | - | - | - | - | - | - | - |

(continued)

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Shape | Neck | Length NL (μm) | 600 | 600 | 600 | 600 | 600 | 450 | 500 | 800 | 500 | 400 |
| | | Thickness NT (μm) | 280 | 280 | 280 | 280 | 280 | 210 | 280 | 280 | 280 | 210 |
| | Shoulder | Length SL (μm) | 1920 | 1920 | 1920 | 1400 | 1920 | 2400 | 1600 | 1450 | 1600 | 2400 |
| | Lip | Length LM (μm) | 1250 | 1250 | 1250 | 1500 | 1250 | 1250 | 1250 | 1600 | 1250 | 1000 |
| | | Length LL (μm) | 4250 | 4250 | 4250 | 4500 | 4250 | 4250 | 4250 | 4600 | 4250 | 4000 |
| | | Thickness LT (μm) | 580 | 580 | 580 | 580 | 580 | 580 | 580 | 580 | 580 | 650 |
| | Length of shoulder SL/Length of neck NL | | 320 | 320 | 320 | 233 | 320 | 533 | 320 | 181 | 320 | 600 |
| Material composition | M2/M1 of first side surface | | 0.0129 | 00165 | 0.0124 | 0.0124 | 0.0108 | 00108 | 00099 | 00098 | 0.0137 | 0.0137 |
| | M2/M1 of second side surface | | 0.0128 | 0.0166 | 0.0124 | 0.0123 | 0.0107 | 0.0108 | 0.0098 | 0.0098 | 0.0138 | 0.0137 |
| | M3/M1 of first side surface | | 0.0522 | 0.0650 | 0.0583 | 0.0584 | 0.0499 | 0.0498 | 0.0469 | 0.0469 | 0.0438 | 0.0440 |
| | M3/M1 of second side surface | | 0.0523 | 0.0651 | 0.0584 | 0.0584 | 0.0498 | 0.0498 | 0.0471 | 0.0470 | 0.0439 | 0.0439 |
| | Concentration of polyfunctional alcohol of the first side surface (mmol/g) | | 0.24 | 0.23 | 0.25 | 0.26 | 0.31 | 0.30 | 0.33 | 0.32 | 0.18 | 0.17 |
| | Concentration of polyfunctional alcohol of the second side surface (mmol/g) | | 0.24 | 0.22 | 0.26 | 0.26 | 0.31 | 0.30 | 0.32 | 0.32 | 0.17 | 0.17 |

Table 3

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Physical propertie s | 50% modulus (MPa) | | 116 | 13.1 | 10.6 | 10.6 | 6.6 | 6.6 | 4.2 | 4.2 | 5.4 | 5.4 |
| | Elastic modulus of first side surface | Average value (MPa) | 57.8 | 60.8 | 55.5 | 55.4 | 47.3 | 47.8 | 42.3 | 42.6 | 45.1 | 45.4 |
| | | Coefficient of variation | 30 | 30 | 30 | 30 | 3.1 | 31 | 3.2 | 3.2 | 31 | 31 |
| | Elastic modulus of second side surface | Average value (MPa) | 57.5 | 60.5 | 55.7 | 55.8 | 47.5 | 47.6 | 42.8 | 42.5 | 45.3 | 45.2 |
| | | Coefficient of variation | 30 | 30 | 30 | 30 | 3.1 | 3.1 | 3.1 | 3.2 | 3.1 | 31 |
| | Forward-path contact posture | Formed angle (°) | 70 | 75 | 67 | 60 | 55 | 61 | 42 | 37 | 47 | 61 |
| Evaluatio n | | Contact width A (μm) | 1.5 | 12 | 18 | 14 | 51 | 58 | 61 | 72 | 57 | 8.1 |
| | | Standard deviation of contact width A (μm) | 078 | 0.77 | 079 | 079 | 0.82 | 0.81 | 084 | 0.83 | 0.82 | 0.81 |
| | | Contact width B (μm) | 1.3 | 1.1 | 1.6 | 1.1 | 4.1 | 44 | 3.9 | 5.8 | 4.6 | 6.9 |
| | | Wiping speed dependence of formed angle θ (%) | 2.3 | 0.62 | 2.5 | 2.1 | 6.3 | 6.8 | 13.2 | 12.6 | 7.3 | 7.3 |
| | | Load dependence of contact width (μm/(N/m)) | 0.02 | 0.015 | 0.03 | 0.04 | 0.13 | 0.18 | 0.27 | 0.18 | 0.14 | 0.15 |

(continued)

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| | Return-path contact posture | Formed angle (°) | 71 | 74 | 67 | 61 | 56 | 61 | 41 | 36 | 47 | 60 |
| | | Contactwidth A (μm) | 17 | 12 | 17 | 16 | 53 | 59 | 62 | 7.3 | 57 | 8.3 |
| | | Standard deviation of contact width A (μm) | 0.79 | 0.78 | 0.79 | 0.79 | 0.81 | 0.81 | 0.83 | 0.83 | 0.82 | 0.82 |
| | | Contactwidth B (μm) | 1.5 | 11 | 15 | 13 | 43 | 4.5 | 4.0 | 58 | 4.5 | 6.9 |
| | | Wipingspeed dependence of formed angle θ (%) | 22 | 0.62 | 2.4 | 20 | 62 | 67 | 136 | 12.8 | 72 | 75 |
| | | Load dependence of contact width (μm/(N/m) ) | 0.02 | 0.015 | 0.03 | 0.04 | 0.12 | 0.17 | 0.28 | 0.19 | 0.15 | 0.17 |

(continued)

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Performance evaluation | Forward-path wiping performance | Water wiping performance (center) | A | A | A | A | B | A | B | C | B | A |
| | | Water wiping performance unevenness (difference in longitudinal direction) | A | A | A | A | B | B | C | C | B | B |
| | Return-path wiping performance | Water wiping performance (center) | A | A | A | A | B | A | B | C | B | A |
| | | Water wiping performance unevenness (difference in longitudinal direction) | A | A | A | A | B | B | C | C | B | B |
| | Oil film wiping performance (center) | | A | A | A | A | B | B | B | C | B | B |

In Tables 3 to 6, the "forward-path contact posture" is obtained by evaluation of the first side surface side, and the "return-path contact posture" is obtained by evaluation of the second side surface side.

[Table 4]

Table 4

| | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| Formulation | Prepolymer | Amount of MDI (g) | 191.1 | 194.8 | 173.3 | 216.3 | 216.3 | 1400 | 358.0 | 3580 | 403.4 | 2163 |
| | | Type of trifunctional or higher polyfunctional isocyanate | MR200 | TPTI | TTI | TPTI | TPTI | Cosmonate M-200 | TTI | TTI | - | TPTI |
| | | Amount of trifunctional or higher polyfunctional isocyanate (g) | 210.0 | 240.0 | 210.0 | 210.0 | 210.0 | 220.0 | 100 | 100 | - | 2100 |
| | | Type of polyol | PBA2500 | PBA2500 | PBA2500 | PBA2500 | PBA2500 | PTG-2000SN | PBA2500 | PBA2500 | PBA1000 PBA2000 | PBA2500 |
| | | Amount of polyol (g) | 598.9 | 565.2 | 616.7 | 573.7 | 573.7 | 6400 | 632.0 | 6320 | 5966 | 573.7 |
| | Curing agent | Type of trifunctional or higher polyfunctional alcohol | TMP | TMP | Glycerin | PEN | PEN | TMP | Glycerin | Glycerin | PEN | PEN |
| | | Amount of trifunctional or higher polyfunctional alcohol (g) | 56.0 | 58.9 | 48.6 | 31.7 | 31.7 | 45.6 | 33.1 | 33.1 | 34.3 | 317 |
| | | Type of polyol | PHA1000 | PHA1000 | PHA1000 | PHA1000 | PHA1000 | PTG-1000SN | PHA1000 | PHA1000 | PHA1000 | PHA1000 |
| | | Amount of polyol (g) | 317.5 | 333.8 | 2751 | 256.1 | 256.1 | 25855 | 187.6 | 187.6 | 4293 | 256.1 |
| | | Amount of 1 ,4-BD (g) | 0.0 | 0.0 | 0.0 | 0.0 | 0.0 | 0.0 | 0.0 | 0.0 | 8.6 | 0.0 |
| | | Amount of Polycat 46 (g) | 0.15 | 0.15 | 014 | 014 | 014 | 014 | 013 | 013 | 0.12 | 0.14 |
| | | No.25 (g) | 0.47 | 0.48 | 0.45 | 0.44 | 0.44 | 0.45 | 0.42 | 0.42 | 0.37 | 0.44 |
| | | RX5 (g) | 0.00 | 0.00 | 0.00 | 0.00 | 0.00 | 0.00 | 0.00 | 0.00 | 0.00 | 0.00 |
| Post-treatment | | | - | - | - | - | - | - | - | - | - | Immersion in 4,4'-MDI, 80°C, 90 sec → 1 00°C, 30 min |

(continued)

| | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| Shape | Neck | Length NL (μm) | 600 | 600 | 600 | 600 | 300 | 600 | 600 | 250 | 300 | 600 |
| | | Thickness NT (μm) | 280 | 280 | 280 | 280 | 180 | 280 | 280 | 180 | 210 | 280 |
| | Shoulder | Length SL (μm) | 1920 | 1920 | 1920 | 1920 | 2400 | 1920 | 1920 | 2250 | 1600 | 1920 |
| | Lip | Length LM (μm) | 1250 | 1250 | 1250 | 1250 | 1250 | 1250 | 1250 | 1250 | 1250 | 1250 |
| | | Length LL (μm) | 4250 | 4250 | 4250 | 4250 | 4250 | 4250 | 4250 | 4250 | 4250 | 4250 |
| | | Thickness LT (μm) | 580 | 580 | 580 | 580 | 580 | 580 | 580 | 580 | 650 | 580 |
| | Length of shoulder SL/Length of neck NL | | 3.20 | 3.20 | 3.20 | 3.20 | 8.00 | 3.20 | 3.20 | 9.00 | 5.33 | 3.20 |
| Material composition | M21M 1 of first side surface | | 0.0108 | 00146 | 0.0117 | 0.0126 | 00126 | 0.0138 | 0.0012 | 0.0011 | - | 0.0126 |
| | M21M1 of second side surface | | 00109 | 0.0145 | 0.0118 | 00126 | 00125 | 00137 | 0.0011 | 0.0011 | - | 0.0127 |
| | M31M 1 of first side surface | | 0.0486 | 00489 | 00456 | 00587 | 00588 | 00374 | 01030 | 01026 | 0.1300 | 0.0588 |
| | M31M1 of second side surface | | 0.0487 | 0.0489 | 0.0458 | 0.0586 | 00587 | 0.0375 | 01026 | 01023 | 01299 | 0.0588 |
| | Concentration of polyfunctional alcohol of the first side surface (mmol/g) | | 0.30 | 0.32 | 0.40 | 0.17 | 0.18 | 0.27 | 0.28 | 0.30 | 0.23 | 0.18 |
| | Concentration of polyfunctional alcohol of the second side surface (mmol/g) | | 0.31 | 0.32 | 0.39 | 0.17 | 0.19 | 0.26 | 0.29 | 0.28 | 0.22 | 0.17 |

Table 4

| | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| Physical properties | 50% modulus (MPa) | | 4.8 | 44 | 3.6 | 68 | 6.8 | 44 | 24 | 24 | 18 | 69 |
| | Elastic modulus of first side surface | Average value (MPa) | 47.3 | 45.7 | 42.6 | 55.7 | 55.6 | 45.7 | 20.2 | 20.4 | 151 | 65.3 |
| | | Coefficient of variation | 3.1 | 3.1 | 3.5 | 3.2 | 3.2 | 3.1 | 3.9 | 3.8 | 106 | 66 |
| | Elastic modulus of second side surface | Average value (MPa) | 47.5 | 45.5 | 42.5 | 555 | 55.6 | 45.5 | 20.3 | 20.5 | 150 | 652 |
| | | Coefficient of variation | 3.1 | 3.1 | 3.6 | 3.2 | 3.3 | 3.1 | 3.8 | 3.8 | 107 | 66 |
| Evaluation | Forward-path contact posture | Formed angle (°) | 519 | 48.9 | 43.1 | 67.6 | 67.4 | 489 | 28.3 | 34.1 | 250 | 800 |
| | | Contact width A (μm) | 4.8 | 5.4 | 64 | 20 | 2.8 | 5.5 | 141 | 182 | 187 | 1.0 |
| | | Standard deviation of contact width A (μm) | 0.82 | 0.82 | 0.83 | 0.79 | 0.79 | 0.82 | 1.04 | 103 | 3.01 | 183 |
| | | Contact width B (μm) | 3.8 | 4.5 | 5.0 | 16 | 22 | 4.1 | 100 | 13.8 | 137 | 0.6 |
| | | Wiping speed dependence of formed angle θ (%) | 6.5 | 4.8 | 11.1 | 2.7 | 2.9 | 9.1 | 181 | 17.9 | 184 | 26 |
| | | Load dependence of contact width (μm/ (N/m) ) | 0.13 | 0.11 | 0.18 | 0.05 | 0.07 | 0.17 | 0.51 | 0.55 | 0.63 | 0.05 |
| | Return-path contact posture | Formed angle (°) | 52.3 | 48.5 | 42.9 | 672 | 78.0 | 48.3 | 280 | 34.0 | 247 | 799 |
| | | Contact width A (μm) | 4.8 | 5.4 | 6.5 | 20 | 2.8 | 5.4 | 140 | 18.3 | 187 | 1.0 |
| | | Standard deviation of contact width A (μm) | 0.81 | 0.82 | 0.83 | 0.79 | 0.79 | 0.82 | 1.03 | 102 | 303 | 184 |
| | | Contact width B (μm) | 3.8 | 46 | 5.1 | 1.5 | 22 | 4.0 | 9.9 | 14.0 | 13.6 | 0.4 |
| | | Wiping speed dependence of formed angle θ (%) | 66 | 4.9 | 11.2 | 26 | 3.1 | 9.3 | 17.9 | 18.5 | 18.3 | 25 |
| | | Load dependence of contact width (μm/ (N/m) ) | 0.12 | 0.11 | 0.17 | 0.06 | 0.08 | 0.18 | 0.52 | 0.54 | 0.64 | 0.07 |
| Performance evaluation | Forward-path wiping performance | Water wiping performance (center) | B | B | B | A | B | B | C | D | D | D |
| | | Water wiping performance unevenness (difference in longitudinal direction) | B | B | C | A | B | B | D | D | D | D |
| | Return-path wiping performance | Water wiping performance (center) | B | B | B | A | B | B | C | D | D | D |
| | | Water wiping performance unevenness (difference in longitudinal direction) | B | B | C | A | B | B | D | D | D | D |
| | Oil film wiping performance (center) | | B | B | B | A | B | B | D | D | D | D |

[Table 5]

Table 5

| | | | Example 21 | Example 22 | Example 23 | Example 24 | Example 25 | Example 26 |
|---|---|---|---|---|---|---|---|---|
| Formulat ion | Prepolymer | Amount of MDI (g) | 403.4 | 358.0 | 403.4 | 173.3 | 358.0 | - |
| | | Type of trifunctional or higher polyfunctional isocyanate | - | TTI | - | TTI | TTI | - |
| | | Amount of trifunctional or higher polyfunctional isocyanate (g) | - | 10.0 | - | 210.0 | 10.0 | |
| | | Type of polyol | PBA1000 PBA2000 | PBA2500 | PBA1000 PBA2000 | PBA2500 | PBA2500 | - |
| | | Amount of polyol (g) | 596.6 | 632.0 | 596.6 | 616.7 | 632.0 | - |
| | Curing agent | Type of trifunctional or higher polyfunctional alcohol | PEN | Glycerin | PEN | Glycerin | Glycerin | - |
| | | Amount of trifunctional or higher polyfunctional alcohol (g) | 34.3 | 33.1 | 34.3 | 48.6 | 33.1 | - |
| | | Type of polyol | PHA1000 | PHA1000 | PHA1000 | PHA1000 | PHA1000 | - |
| | | Amount of polyol (g) | 42.93 | 187.6 | 42.93 | 275.1 | 187.6 | - |
| | | Amount of 1,4-BD (g) | 8.6 | 0.0 | 8.6 | 0.0 | 0.0 | - |
| | | Amount of Polycat 46 (g) | 0.12 | 0.13 | 0.12 | 0.14 | 0.13 | - |
| | | No.25 (g) | 0.37 | 0.42 | 0.37 | 0.45 | 0.42 | - |
| | | RX5 (g) | 0.00 | 0.00 | 0.00 | 0.00 | 0.00 | - |
| Post-treatment | | | Immersio n in 4,4'-MDI, 80° C, 90 sec → 100° C, 30 min | Immersio n in 4,4'-MDI, 80° C, 90 sec | UV 492 MJ/cm2 | UV 1968 MJ/cm2 | UV 3936 MJ/cm2 | - |

(continued)

| | | | Example 21 | Example 22 | Example 23 | Example 24 | Example 25 | Example 26 |
|---|---|---|---|---|---|---|---|---|
| Shape | Neck | Length NL (μm) | 300 | 500 | 300 | 500 | 200 | 800 |
| | | Thickness NT (μm) | 210 | 280 | 210 | 280 | 180 | 280 |
| | Shoulder | Length SL (μm) | 1600 | 1800 | 1600 | 1600 | 1800 | 1450 |
| | Lip | Length LM (μm) | 1250 | 1250 | 1250 | 1250 | 1250 | 1000 |
| | | Length LL (μm) | 4250 | 4250 | 4250 | 4250 | 4250 | 4000 |
| | | Thickness LT (μm) | 650 | 580 | 650 | 580 | 580 | 650 |
| | Length of shoulder SL/Length of neck NL | | 5.33 | 3.60 | 5.33 | 3.20 | 9.00 | 1.81 |
| Material composit ion | M21M1 of first side surface | | - | 0.0012 | - | 0.0118 | 0.0013 | - |
| | M21M1 of second side surface | | - | 0.0011 | - | 0.0120 | 0.0012 | - |
| | M31M1 of first side surface | | 0.1293 | 0.1027 | 0.1299 | 0.0456 | 0.1025 | - |
| | M3/M1 of second side surface | | 0.1300 | 0.1025 | 0.1300 | 0.0457 | 0.1026 | - |
| | Concentration of polyfunctional alcohol of the first side surface (mmol/g) | | 0.23 | 0.29 | 0.22 | 0.41 | 0.29 | - |
| | Concentration of polyfunctional alcohol of the second side surface (mmol/g) | | 0.24 | 0.31 | 0.23 | 0.42 | 0.30 | - |

Table 5

| | | | Example 21 | Example 22 | Example 23 | Example 24 | Example 25 | Example 26 |
|---|---|---|---|---|---|---|---|---|
| Physical properties | 50% modulus (MPa) | | 2.6 | 3.0 | 2.3 | 3.8 | 2.9 | 3.1 |
| | Elastic modulus of first side surface | Average value (MPa) | 30.0 | 457.0 | 45.0 | 283.3 | 471.2 | 51.1 |
| | | Coefficient of variation | 10.3 | 6.2 | 11.6 | 1.6 | 5.0 | 112.0 |
| | Elastic modulus of second side surface | Average value (MPa) | 30.2 | 456.7 | 45.2 | 283.1 | 472.2 | 51.3 |
| | | Coefficient of variation | 10.9 | 6.2 | 11.6 | 1.6 | 5.0 | 110.9 |
| Evaluation | Forward-path contact posture | Formed angle (°) | 41.8 | 74.1 | 62.3 | 71.8 | 75.0 | 35.0 |
| | | Contact width A (μm) | 14.8 | 15.0 | 16.1 | 5.0 | 10.0 | 15.8 |
| | | Standard deviation of contact width A (μm) | 2.93 | 1.73 | 3.29 | 0.38 | 1.46 | 6.00 |
| | | Contact width B (μm) | 9.6 | 10.8 | 14.7 | 3.9 | 7.4 | 11.4 |
| | | Wiping speed dependence of formed angle θ (%) | 18.6 | 13.3 | 5.7 | 1.0 | 8.5 | 15.3 |
| | | Load dependence of contact width (μm/(N/m)) | 0.65 | 0.53 | 0.18 | 0.14 | 0.32 | 0.55 |
| | Return-path contact posture | Formed angle (°) | 41.2 | 74.3 | 62.1 | 71.9 | 75.0 | 34.7 |
| | | Contact width A (μm) | 15.0 | 14.9 | 16.3 | 5.3 | 10.0 | 15.2 |
| | | Standard deviation of contact width A (μm) | 3.10 | 1.73 | 3.29 | 0.38 | 1.44 | 5.98 |
| | | Contact width B (μm) | 10.0 | 10.9 | 14.7 | 3.9 | 7.4 | 11.2 |
| | | Wiping speed dependence of formed angle θ (%) | 18.5 | 13.2 | 5.5 | 1.1 | 8.8 | 12.7 |
| | | Load dependence of contact width (μm/(N/m)) | 0.63 | 0.51 | 0.17 | 0.15 | 0.33 | 0.53 |

(continued)

| | | | Example 21 | Example 22 | Example 23 | Example 24 | Example 25 | Example 26 |
|---|---|---|---|---|---|---|---|---|
| Performance evaluation | Forward-path wiping performance | Water wiping performance (center) | C | B | C | A | A | D |
| | | Water wiping performance unevenness (difference in longitudinal direction) | D | C | D | A | B | D |
| | Return-path wiping performance | Water wiping performance (center) | C | B | C | A | A | D |
| | | Water wiping performance unevenness (difference in longitudinal direction) | D | C | D | A | B | D |
| | Oil film wiping performance (center) | | D | C | D | A | B | E |

[Table 6]

Table 6

| | | | Comparative Example 1 | Comparative Example 2 | Comparative Example 3 | Comparative Example 4 |
|---|---|---|---|---|---|---|
| Formulation | Prepolymer | Amount of MDI (g) | - | - | - | - |
| | | Type of trifunctional or higher polyfunctional isocyanate | - | - | - | - |
| | | Amount of trifunctional or higher polyfunctional isocyanate (g) | - | - | - | - |
| | | Type of polyol | - | - | - | - |
| | | Amount of polyol (g) | - | - | - | - |
| | Curing agent | Type of trifunctional or higher polyfunctional alcohol | - | - | - | - |
| | | Amount of trifunctional or higher polyfunctional alcohol (g) | - | - | - | - |
| | | Type of polyol | - | - | - | - |
| | | Amount of polyol (g) | - | - | - | - |
| | | Amount of 1,4-BD (g) | - | - | - | - |
| | | Amount of Polycat 46 (g) | - | - | - | - |
| | | No.25 (g) | - | - | - | - |
| | | RX5 (g) | - | - | - | - |
| Post-treatment | | | - | - | - | - |

(continued)

| | | | Comparative Example 1 | Comparative Example 2 | Comparative Example 3 | Comparative Example 4 |
|---|---|---|---|---|---|---|
| Shape | Neck | Length NL (μm) | 680 | 300 | 250 | 1000 |
| | | Thickness NT (μm) | 425 | 210 | 150 | 280 |
| | Shoulder | Length SL (μm) | 1500 | 1600 | 2500 | 1400 |
| | Lip | Length LM (μm) | 1650 | 1250 | 1000 | 2000 |
| | | Length LL (μm) | 4650 | 4250 | 3500 | 5000 |
| | | Thickness LT (μm) | 565 | 650 | 700 | 450 |
| | Length of shoulder SL/Length of neck NL | | 2.21 | 5.33 | 1000 | 1.40 |
| Physical properties | 50% modulus (MPa) | | 1.6 | 1.5 | 3.2 | 3.1 |
| | Elastic modulus of first side surface | Average value (MPa) | 72.28 | 73.3 | 55 | 52 |
| | | Coefficient of variation | 122.3 | 122.4 | 111.2 | 115.1 |
| | Elastic modulus of second side surface | Average value (MPa) | 71.9 | 72.1 | 51 | 51 |
| | | Coefficient of variation | 121.4 | 122.2 | 113.2 | 113.8 |

(continued)

| | | | Comparative Example 1 | Comparative Example 2 | Comparative Example 3 | Comparative Example 4 |
|---|---|---|---|---|---|---|
| Evaluation | Forward-path contact posture | Formed angle (°) | 12.6 | 20.3 | 81.4 | 18.1 |
| | | Contact width A (μm) | 52.6 | 83.8 | 18.3 | 14.8 |
| | | Standard deviation of contact width A (μ m) | 6.21 | 6.17 | 5.98 | 5.87 |
| | | Contact width B (μm) | 37.8 | 60.8 | 12.0 | 10.2 |
| | | Wiping speed dependence of formed angle θ (%) | 27.8 | 19.9 | 19.5 | 18.8 |
| | | Load dependence of contact width (μm/ (N/m) ) | 1.85 | 2.87 | 0.79 | 0.58 |
| | Return-path contact posture | Formed angle (°) | 12.1 | 22.1 | 80.5 | 18.7 |
| | | Contact width A (μm) | 51.7 | 81.1 | 17.3 | 15.4 |
| | | Standard deviation of contact width A (μ m) | 6.18 | 6.22 | 5.87 | 5.99 |
| | | Contact width B (μm) | 36.7 | 56.9 | 10.8 | 10.5 |
| | | Wiping speed dependence of formed angle θ (%) | 21.6 | 19.3 | 19.8 | 19.0 |
| | | Load dependence of contact width (μm/ (N/m) ) | 1.87 | 302 | 0.81 | 0.61 |

(continued)

| | | | Comparative Example 1 | Comparative Example 2 | Comparative Example 3 | Comparative Example 4 |
|---|---|---|---|---|---|---|
| Performance evaluation | Forward-path wiping performance | Water wiping performance (center) | E | E | E | E |
| | | Water wiping performance unevenness (difference in longitudinal direction) | E | E | E | E |
| | Return-path wiping performance | Water wiping performance (center) | E | E | E | E |
| | | Water wiping performance unevenness (difference in longitudinal direction) | E | E | E | E |
| | Oil film wiping performance (center) | | F | F | F | F |

The present disclosure includes the following configurations.

[Configuration 1]

A wiper device for a windshield, wherein

the wiper device comprises a wiper arm and a wiper blade mounted on the wiper arm;
the wiper blade has a blade rubber and a blade stay that supports the blade rubber;
the blade rubber includes a base, which is an attachment part of the blade rubber to the blade stay, a lip, and a neck that swingably connects the lip to the base;
at least a portion of a tip of the lip constitutes a contact part with the windshield;
in a state obtained by setting an arm pressing force of the wiper arm to 18 N/m, bringing the lip of the wiper blade into contact with a first surface of a glass flat plate, moving the wiper blade through 50 cm at a speed of 1.65 m/sec in a direction A from a first base point P1 to a second base point P2 on the first surface of the glass flat plate in a direction orthogonal to a longitudinal direction of the blade rubber, and stopping the wiper blade,
where a contact part of the lip with the glass flat plate is observed from a second surface side opposite to the first surface of the glass plate and a width of the contact part in the direction orthogonal to the longitudinal direction of the blade rubber is taken as contact width A, the contact width A is 1.0 to 20.0 μm, and where
the blade rubber is observed from a side surface of the blade rubber in the longitudinal direction by using an optical microscope at a magnification of 200 times,
when among the contact parts of the lip with the glass flat plate, the one farthest from the P1 is taken as point Q1, a perpendicular line is dropped to the first surface of the glass flat plate at a position 200 μm from the point Q1 in the direction A, and an initial intersection of the perpendicular line with the lip is taken as point Q2, an angle θ formed between a straight line connecting the point Q1 and the point Q2 and the first surface of the glass flat plate is 20 to 80°.

[Configuration 2]

The wiper device according to Configuration 1, wherein a standard deviation of the contact width A is 6.00 μm or less.

[Configuration 3]

The wiper device according to Configuration 1 or 2, wherein

in a state obtained by setting the arm pressing force of the wiper arm to 10 N/m, bringing the lip of the wiper blade into contact with the first surface of the glass flat plate, moving the wiper blade through 50 cm at a speed of 1.65 m/sec in the direction A from the first base point P1 to the second base point P2 on the first surface of the glass flat plate in the direction orthogonal to the longitudinal direction of the blade rubber, and stopping the wiper blade, when the contact part of the lip with the glass flat plate is observed from the second surface side opposite to the first surface of the glass, and the width of the contact part in the direction perpendicular to the longitudinal direction of the blade rubber is taken as contact width B,
load dependence of the contact width calculated from the contact width A and the contact width B in accordance with a following formula (A) is 0.01 to 0.60 μm;

$$\text{Load dependence of contact width } (\mu m/(N/m)) = (\text{Contact width A } (\mu m) - \text{Contact width B } (\mu m))/(\text{Load 18 } (N/m) - \text{Load 10 } (N/m)) \quad (A).$$

[Configuration 4]

The wiper device according to any of Configurations 1 to 3, wherein

in a state obtained by setting the arm pressing force of the wiper arm to 18 N/m, bringing the lip of the wiper blade into contact with the first surface of the glass flat plate, moving the wiper blade through 50 cm at a speed of 0.60 m/sec in the direction A from the first base point P1 to the second base point P2 on the first surface of the glass flat plate in the direction orthogonal to the longitudinal direction of the blade rubber, and stopping the wiper blade, where the blade rubber is observed from the side surface of the blade rubber in the longitudinal direction by using the optical microscope at the magnification of 200 times,
when among the contact parts of the lip with the glass flat plate, the one farthest from the P1 is taken as point Q1, a perpendicular line is dropped to the first surface of the glass flat plate at a position 200 μm from the point Q1 in the direction A, and the initial intersection of the perpendicular line with the lip is taken as point Q2, and an angle formed between a straight line connecting the point Q1 and the point Q2 and the first surface of the glass flat plate is taken as θ',
wiping speed dependence of the formed angle θ calculated from the formed angle θ and the formed angle θ' in accordance with a following formula (B) is 0.2 to 18.5%;

$$\text{Wiping speed dependence of formed angle } \theta\ (\%) = (\text{Formed angle } \theta' - \text{Formed angle } \theta)/\text{Formed angle } \theta \times 100 \quad (B).$$

[Configuration 5]

The wiper device according to any of Configurations 1 to 4, wherein

the lip includes a shoulder extending laterally from the neck at the end of the lip on the neck side, and
a ratio (SL/NL) of the length SL of the shoulder to the length NL of the neck in a cross section perpendicular to the longitudinal direction of the blade rubber is 0.37 to 9.00.

[Configuration 6]

The wiper device according to any of Configurations 1 to 5, wherein a tensile stress of the tip portion of the lip at 50% extension measured by a tensile tester is 1.8 to 20.0 MPa.

[Configuration 7]

The wiper device according to any of Configurations 1 to 6, wherein

the lip has a tapered portion in which a cross section in the direction perpendicular to the longitudinal direction of the blade rubber gradually decreases in width from a side close to the base in a direction away from the base;
the lip has

a first side surface and a second side surface that are continuous with the tapered portion, and
a tip surface that, together with the first side surface and the second side surface, constitutes a first edge and a second edge on the side of the lip farthest from the base;

in a first line segment assumed to be drawn on the first side surface in parallel with the first edge at a distance of 10 μm from the first edge,
a length of the first line segment is denoted by L1,
points at (1/8)L1, (1/2)L1, and (7/8)L1 from one end side on the first line segment are denoted by P0, P1, and P2, respectively, the average value of a total of 210,000 elastic modulus values obtained when the elastic modulus of the first side surface at each of 7000 points arranged with a pitch of 0.1 μm is measured using a scanning probe microscope with respect to each of three rectangular observation regions, for which the points P0, P1, and P2 on the first side surface are respective centers of gravity and in which one side is parallel to the first line segment and has a length of 70 μm and the other side is perpendicular to the first line segment and has a length of 10 μm, is 15.0 to 470.0 MPa,
in a second line segment assumed to be drawn on the second side surface in parallel with the second edge at a distance of 10 μm from the second edge,
a length of the second line segment is denoted by L2,
points at (1/8)L2, (1/2)L2, and (7/8)L2 from one end side on the second line segment are denoted by P3, P4, and P5, respectively, the average value of a total of 210,000 elastic modulus values obtained when the elastic modulus of the second side surface at each of 7000 points arranged with a pitch of 0.1 μm is measured using the scanning probe microscope with respect to each of three rectangular observation regions, for which the points P3, P4, and P5 on the second side surface are respective centers of gravity and in which one side is parallel to the second line segment and has a length of 70 μm and the other side is perpendicular to the second line segment and has a length of 10 μm, is 15.0 to 470.0 MPa.

[Configuration 8]

The wiper device according to Configuration 7, wherein

in measuring the elastic modulus of the first side surface,
the average value of the elastic modulus values is 32.0 to 62.0 MPa, and
in measuring the elastic modulus of the second side surface,
the average value of the elastic modulus values is 32.0 to 62.0 MPa.

[Configuration 9]

The wiper device according to Configuration 7 or 8, wherein

in measuring the elastic modulus of the first side surface,
a coefficient of variation of the elastic modulus is 17.6% or less, and
in measuring the elastic modulus of the second side surface,
a coefficient of variation of the elastic modulus is 17.6% or less.

[Configuration 10]

The wiper device according to any of Configurations 7 to 9, wherein

in measuring the elastic modulus of the first side surface,
the coefficient of variation of the elastic modulus is 6.0% or less, and
in measuring the elastic modulus of the second side surface,

the coefficient of variation of the elastic modulus is 6.0% or less.

[Configuration 11]

The wiper device according to any of Confgurations 1 to 10, wherein

the lip includes polyurethane, and
the polyurethane includes a reaction product of a raw material composition including at least one of an alcohol including a trifunctional or higher polyfunctional alcohol and an isocyanate compound including a trifunctional or higher polyfunctional isocyanate.

[Configuration 12]

The wiper device according to Configuration 11, wherein the alcohol further contains diol.

[Configuration 13]

The wiper device according to Configuration 11 or 12, wherein the isocyanate compound further contains diisocyanate.

[Configuration 14]

The wiper device according to Configuration 13, wherein

the lip has the tapered portion in which the cross section in the direction perpendicular to the longitudinal direction of the blade rubber gradually decreases in width from the side close to the base in the direction away from the base;
the lip has

the first side surface and the second side surface that constitute the tapered portion, and
the tip surface that, together with the first side surface and the second side surface, constitutes the first edge and the second edge on the side of the lip farthest from the base;

in respective line segments assumed to be drawn on the first side surface and the second side surface of the lip in parallel with the first edge and the second edge at a distance of 0.5 mm from the first edge and the second edge, the length of each line segment is denoted by L', and points at 1/8L', 1/2L', and 7/8L' from one end side on the line segments are denoted by P0', P1', and P2', respectively,
the detected amount of all ions obtained when samples sampled at each of the P0', the P1', and the P2' of the first side surface and the second side surface are heated to 1000°C at a temperature rise rate of 10°C/s by using a mass spectrometer of a direct sample introduction system in which a sample is heated and vaporized in an ionization chamber to ionize sample molecules is denoted by M1,
integrated intensity of a peak of an extracted ion thermogram corresponding to a range of m/z value derived from the trifunctional or higher polyfunctional isocyanate is denoted by M2, and
integrated intensity of a peak of an extracted ion thermogram corresponding to a range of m/z value derived from the diisocyanate is denoted by M3,
of the first side surface, M2/M1 is 0.0010 to 0.0150 and M3/M1 is 0.0200 to 0.1100, and
of the second side surface, M2/M1 is 0.0010 to 0.0150 and M3/M1 is 0.0200 to 0.1100.

[Configuration 15]

The wiper device according to any of Configurations 11 to 14, wherein

the lip has the tapered portion in which the cross section in the direction perpendicular to the longitudinal direction of the blade rubber gradually decreases in width from the side close to the base in the direction away from the base;
the lip has
the first side surface and the second side surface that constitute the tapered portion, and
the tip surface that, together with the first side surface and the second side surface, constitutes the first edge and the second edge on the side of the lip farthest from the base;
in respective line segments assumed to be drawn on the first side surface and the second side surface of the lip in

parallel with the first edge and the second edge at a distance of 0.5 mm from the first edge and the second edge, the length of each line segment is denoted by L', and points at 1/8L', 1/2L', and 7/8L' from one end side on the line segments are denoted by P0', P1', and P2', respectively, and
when samples sampled at each of the P0', the P1', and the P2' of the first side surface and the second side surface are measured by pyrolysis GC/MS,
concentration of the trifunctional or higher polyfunctional alcohol in the polyurethane of the first surface is 0.04 to 0.39 mmol/g, and
concentration of the trifunctional or higher polyfunctional alcohol in the polyurethane of the second surface is 0.04 to 0.39 mmol/g.

[Configuration 16]

The wiper device according to any of Configurations 11 to 15, wherein the trifunctional or higher polyfunctional alcohol includes at least one selected from a group consisting of pentaerythritol, trimethylolpropane and glycerin.

[Configuration 17]

The wiper device according to any of Configurations 11 to 16, wherein the trifunctional or higher polyfunctional isocyanate is at least one selected from a group consisting of triphenylmethane-4,4',4"-triisocyanate (TTI), tris(phenylisocyanate) thiophosphate (TPTI) and polymeric MDI.

The present disclosure is not limited to the embodiments above, and can accommodate various modifications and alterations without departing from the spirit and scope of the disclosure. Accordingly, the claims below are appended herein to for the purpose of making public the scope of the present disclosure.

The present application claims priority based on Japanese Patent Application No. 2021-210808 filed on December 24, 2021, and Japanese Patent Application No. 2022-011862 filed on January 28, 2022, the entire contents whereof are incorporated herein.

REFERENCE SIGNS LIST

1 Blade support portion
2 Neck
3 Lip
4 Tapered portion
5 First side surface
6 Second side surface
7 Tip surface
8 First edge
9 Second edge
10 Member to be cleaned
11 First line segment
12 Observation region

## Claims

**1.** A wiper device for a windshield, wherein

the wiper device comprises a wiper arm and a wiper blade mounted on the wiper arm;
the wiper blade has a blade rubber and a blade stay that supports the blade rubber;
the blade rubber includes a base, which is an attachment part of the blade rubber to the blade stay, a lip, and a neck that swingably connects the lip to the base;
at least a portion of a tip of the lip constitutes a contact part with the windshield;
in a state obtained by setting an arm pressing force of the wiper arm to 18 N/m, bringing the lip of the wiper blade into contact with a first surface of a glass flat plate, moving the wiper blade through 50 cm at a speed of 1.65 m/sec in a direction A from a first base point P1 to a second base point P2 on the first surface of the glass flat plate in a direction orthogonal to a longitudinal direction of the blade rubber, and stopping the wiper blade,

where a contact part of the lip with the glass flat plate is observed from a second surface side opposite to the first surface of the glass plate and a width of the contact part in the direction orthogonal to the longitudinal direction of the blade rubber is taken as contact width A, the contact width A is 1.0 to 20.0 μm, and where
the blade rubber is observed from a side surface of the blade rubber in the longitudinal direction by using an optical microscope at a magnification of 200 times,
when among the contact parts of the lip with the glass flat plate, the one farthest from the P1 is taken as point Q1, a perpendicular line is dropped to the first surface of the glass flat plate at a position 200 μm from the point Q1 in the direction A, and an initial intersection of the perpendicular line with the lip is taken as point Q2, an angle θ formed between a straight line connecting the point Q1 and the point Q2 and the first surface of the glass flat plate is 20 to 80°.

**2.** The wiper device according to claim 1, wherein a standard deviation of the contact width A is 6.00 μm or less.

**3.** The wiper device according to claim 1 or 2, wherein

in a state obtained by setting the arm pressing force of the wiper arm to 10 N/m, bringing the lip of the wiper blade into contact with the first surface of the glass flat plate, moving the wiper blade through 50 cm at a speed of 1.65 m/sec in the direction A from the first base point P1 to the second base point P2 on the first surface of the glass flat plate in the direction orthogonal to the longitudinal direction of the blade rubber, and stopping the wiper blade,
when the contact part of the lip with the glass flat plate is observed from the second surface side opposite to the first surface of the glass, and the width of the contact part in the direction perpendicular to the longitudinal direction of the blade rubber is taken as contact width B,
load dependence of the contact width calculated from the contact width A and the contact width B in accordance with a following formula (A) is 0.01 to 0.60 μm;

$$\text{Load dependence of contact width } (\mu m/(N/m)) = (\text{Contact width A } (\mu m) - \text{Contact width B } (\mu m))/(\text{Load 18 } (N/m) - \text{Load 10 } (N/m)) \quad (A).$$

**4.** The wiper device according to any one of claims 1 to 3, wherein

in a state obtained by setting the arm pressing force of the wiper arm to 18 N/m, bringing the lip of the wiper blade into contact with the first surface of the glass flat plate, moving the wiper blade through 50 cm at a speed of 0.60 m/sec in the direction A from the first base point P1 to the second base point P2 on the first surface of the glass flat plate in the direction orthogonal to the longitudinal direction of the blade rubber, and stopping the wiper blade,
where the blade rubber is observed from the side surface of the blade rubber in the longitudinal direction by using the optical microscope at the magnification of 200 times,
when among the contact parts of the lip with the glass flat plate, the one farthest from the P1 is taken as point Q1, a perpendicular line is dropped to the first surface of the glass flat plate at a position 200 μm from the point Q1 in the direction A, and the initial intersection of the perpendicular line with the lip is taken as point Q2, and an angle formed between a straight line connecting the point Q1 and the point Q2 and the first surface of the glass flat plate is taken as θ',
wiping speed dependence of the formed angle θ calculated from the formed angle θ and the formed angle θ' in accordance with a following formula (B) is 0.2 to 18.5%;

$$\text{Wiping speed dependence of formed angle } \theta\ (\%) = (\text{Formed angle } \theta' - \text{Formed angle } \theta)/\text{Formed angle } \theta \times 100 \quad (B).$$

**5.** The wiper device according to any one of claims 1 to 4, wherein

the lip includes a shoulder extending laterally from the neck at the end of the lip on the neck side, and

a ratio (SL/NL) of the length SL of the shoulder to the length NL of the neck in a cross section perpendicular to the longitudinal direction of the blade rubber is 0.37 to 9.00.

**6.** The wiper device according to any one of claims 1 to 5, wherein a tensile stress of the tip portion of the lip at 50% extension measured by a tensile tester is 1.8 to 20.0 MPa.

**7.** The wiper device according to any one of claims 1 to 6, wherein

the lip has a tapered portion in which a cross section in the direction perpendicular to the longitudinal direction of the blade rubber gradually decreases in width from a side close to the base in a direction away from the base;
the lip has

a first side surface and a second side surface that are continuous with the tapered portion, and
a tip surface that, together with the first side surface and the second side surface, constitutes a first edge and a second edge on the side of the lip farthest from the base;

in a first line segment assumed to be drawn on the first side surface in parallel with the first edge at a distance of 10 μm from the first edge,
a length of the first line segment is denoted by L1,
points at (1/8)L1, (1/2)L1, and (7/8)L1 from one end side on the first line segment are denoted by P0, P1, and P2, respectively, the average value of a total of 210,000 elastic modulus values obtained when the elastic modulus of the first side surface at each of 7000 points arranged with a pitch of 0.1 μm is measured using a scanning probe microscope with respect to each of three rectangular observation regions, for which the points P0, P1, and P2 on the first side surface are respective centers of gravity and in which one side is parallel to the first line segment and has a length of 70 μm and the other side is perpendicular to the first line segment and has a length of 10 μm, is 15.0 to 470.0 MPa,
in a second line segment assumed to be drawn on the second side surface in parallel with the second edge at a distance of 10 μm from the second edge,
a length of the second line segment is denoted by L2,
points at (1/8)L2, (1/2)L2, and (7/8)L2 from one end side on the second line segment are denoted by P3, P4, and P5, respectively, the average value of a total of 210,000 elastic modulus values obtained when the elastic modulus of the second side surface at each of 7000 points arranged with a pitch of 0.1 μm is measured using the scanning probe microscope with respect to each of three rectangular observation regions, for which the points P3, P4, and P5 on the second side surface are respective centers of gravity and in which one side is parallel to the second line segment and has a length of 70 μm and the other side is perpendicular to the second line segment and has a length of 10 μm, is 15.0 to 470.0 MPa.

**8.** The wiper device according to claim 7, wherein

in measuring the elastic modulus of the first side surface,
the average value of the elastic modulus values is 32.0 to 62.0 MPa, and
in measuring the elastic modulus of the second side surface,
the average value of the elastic modulus values is 32.0 to 62.0 MPa.

**9.** The wiper device according to claim 7 or 8, wherein

in measuring the elastic modulus of the first side surface,
a coefficient of variation of the elastic modulus is 17.6% or less, and
in measuring the elastic modulus of the second side surface,
a coefficient of variation of the elastic modulus is 17.6% or less.

**10.** The wiper device according to any one of claims 7 to 9, wherein

in measuring the elastic modulus of the first side surface,
the coefficient of variation of the elastic modulus is 6.0% or less, and
in measuring the elastic modulus of the second side surface,
the coefficient of variation of the elastic modulus is 6.0% or less.

**11.** The wiper device according to any one of claims 1 to 10, wherein

the lip includes polyurethane, and
the polyurethane includes a reaction product of a raw material composition including at least one of an alcohol including a trifunctional or higher polyfunctional alcohol and an isocyanate compound including a trifunctional or higher polyfunctional isocyanate.

**12.** The wiper device according to claim 11, wherein the alcohol further contains diol.

**13.** The wiper device according to claim 11 or 12, wherein the isocyanate compound further contains diisocyanate.

**14.** The wiper device according to claim 13, wherein

the lip has the tapered portion in which the cross section in the direction perpendicular to the longitudinal direction of the blade rubber gradually decreases in width from the side close to the base in the direction away from the base;
the lip has

the first side surface and the second side surface that constitute the tapered portion, and
the tip surface that, together with the first side surface and the second side surface, constitutes the first edge and the second edge on the side of the lip farthest from the base;

in respective line segments assumed to be drawn on the first side surface and the second side surface of the lip in parallel with the first edge and the second edge at a distance of 0.5 mm from the first edge and the second edge, the length of each line segment is denoted by L', and points at 1/8L', 1/2L', and 7/8L' from one end side on the line segments are denoted by P0', P1', and P2', respectively,
the detected amount of all ions obtained when samples sampled at each of the P0', the P1', and the P2' of the first side surface and the second side surface are heated to 1000°C at a temperature rise rate of 10°C/s by using a mass spectrometer of a direct sample introduction system in which a sample is heated and vaporized in an ionization chamber to ionize sample molecules is denoted by M1,
integrated intensity of a peak of an extracted ion thermogram corresponding to a range of m/z value derived from the trifunctional or higher polyfunctional isocyanate is denoted by M2, and
integrated intensity of a peak of an extracted ion thermogram corresponding to a range of m/z value derived from the diisocyanate is denoted by M3,
of the first side surface, M2/M1 is 0.0010 to 0.0150 and M3/M1 is 0.0200 to 0.1100, and
of the second side surface, M2/M1 is 0.0010 to 0.0150 and M3/M1 is 0.0200 to 0.1100.

**15.** The wiper device according to any one of claims 11 to 14, wherein

the lip has the tapered portion in which the cross section in the direction perpendicular to the longitudinal direction of the blade rubber gradually decreases in width from the side close to the base in the direction away from the base;
the lip has
the first side surface and the second side surface that constitute the tapered portion, and
the tip surface that, together with the first side surface and the second side surface, constitutes the first edge and the second edge on the side of the lip farthest from the base;
in respective line segments assumed to be drawn on the first side surface and the second side surface of the lip in parallel with the first edge and the second edge at a distance of 0.5 mm from the first edge and the second edge, the length of each line segment is denoted by L', and points at 1/8L', 1/2L', and 7/8L' from one end side on the line segments are denoted by P0', P1', and P2', respectively, and
when samples sampled at each of the P0', the P1', and the P2' of the first side surface and the second side surface are measured by pyrolysis GC/MS,
concentration of the trifunctional or higher polyfunctional alcohol in the polyurethane of the first surface is 0.04 to 0.39 mmol/g, and
concentration of the trifunctional or higher polyfunctional alcohol in the polyurethane of the second surface is 0.04 to 0.39 mmol/g.

**16.** The wiper device according to any one of claims 11 to 15, wherein the trifunctional or higher polyfunctional alcohol

includes at least one selected from a group consisting of pentaerythritol, trimethylolpropane and glycerin.

**17.** The wiper device according to any one of claims 11 to 16, wherein the trifunctional or higher polyfunctional isocyanate is at least one selected from a group consisting of triphenylmethane-4,4',4"-triisocyanate (TTI), tris(phenylisocyanate) thiophosphate (TPTI) and polymeric MDI.

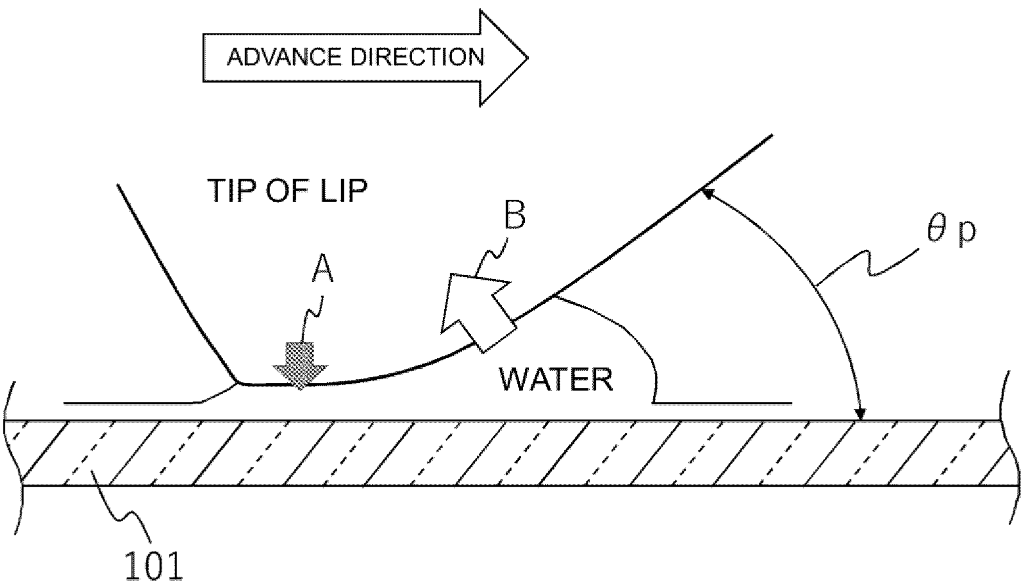


Fig. 1

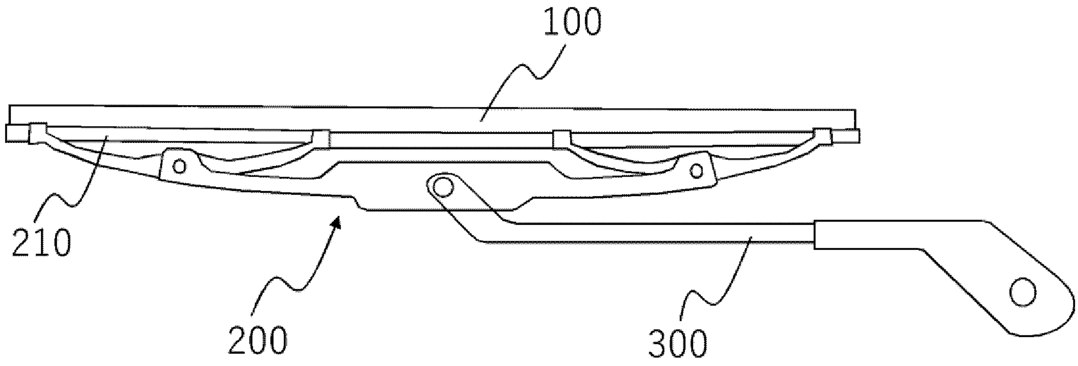


Fig. 2

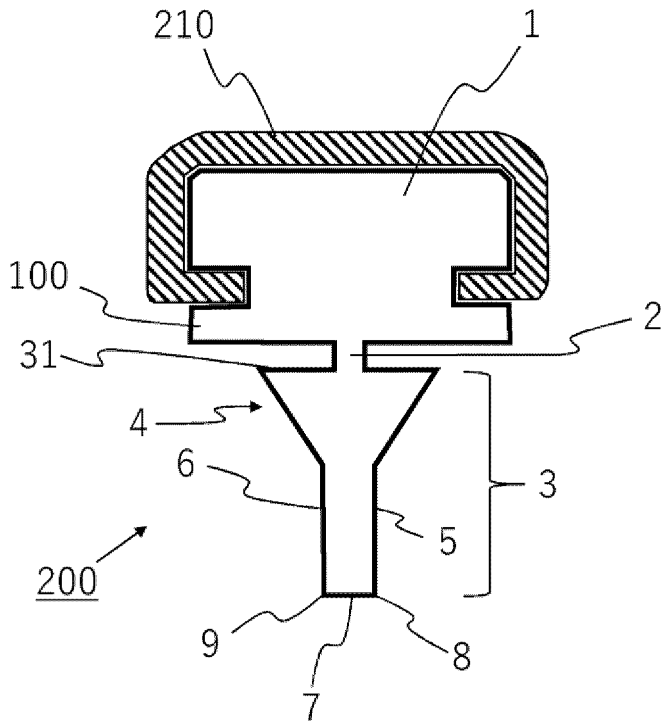


Fig. 3

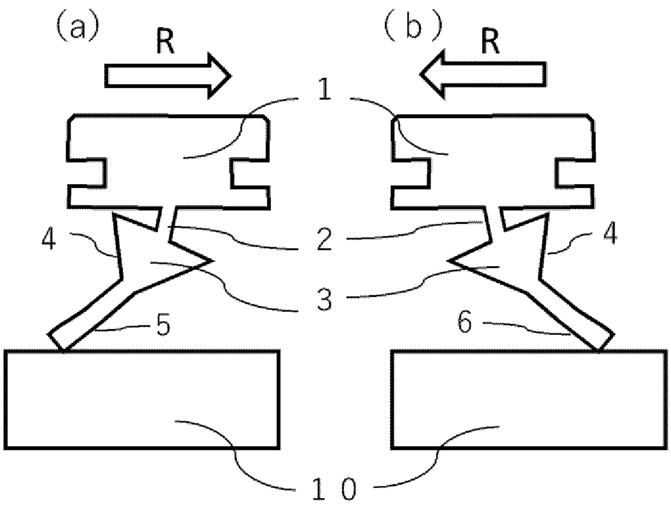


Fig. 4

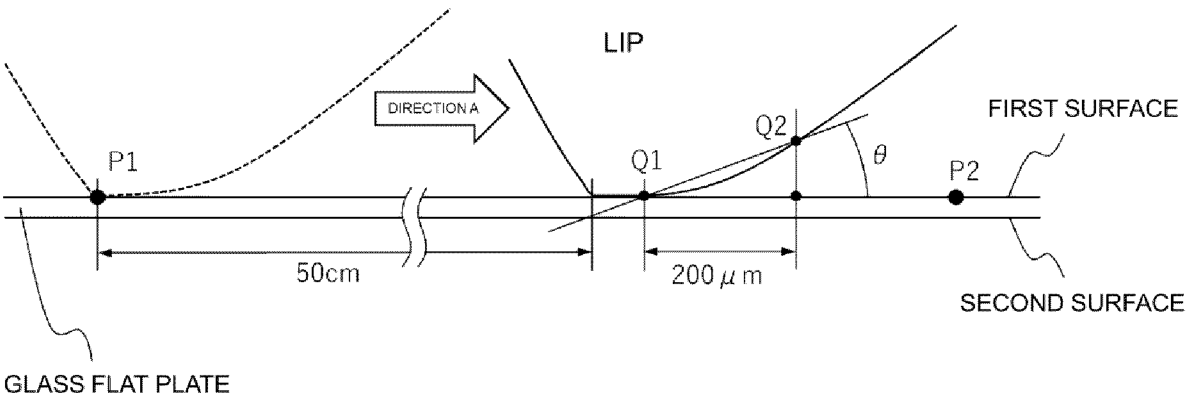
LIP
DIRECTION A
FIRST SURFACE
Q2
θ
P1
Q1
P2
50cm
200 μ m
SECOND SURFACE
GLASS FLAT PLATE

Fig. 5

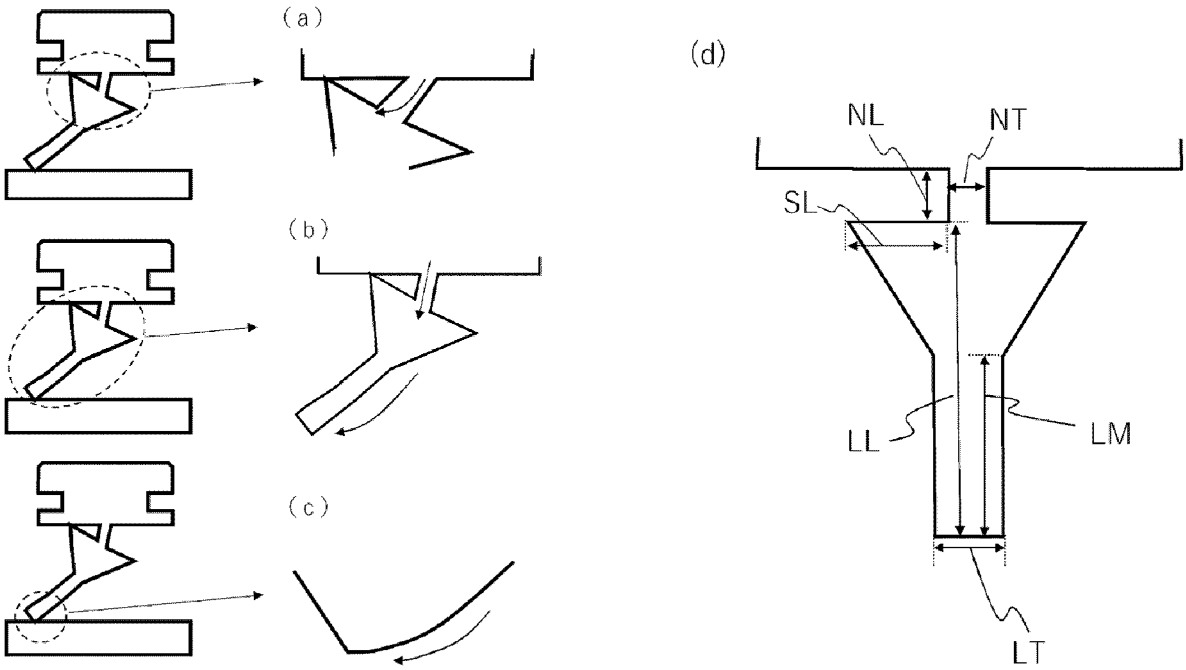


Fig. 6

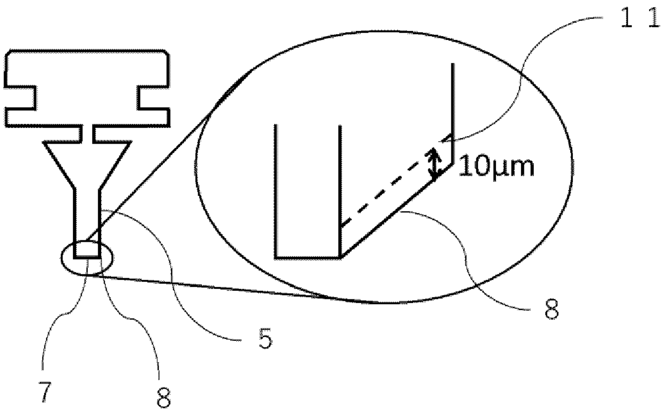


Fig. 7

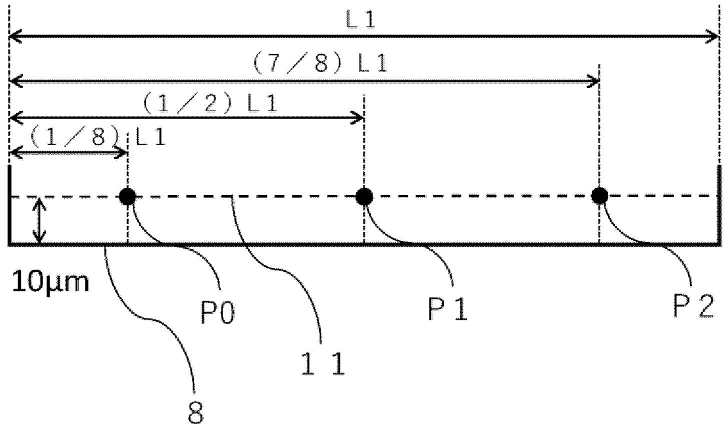


Fig. 8

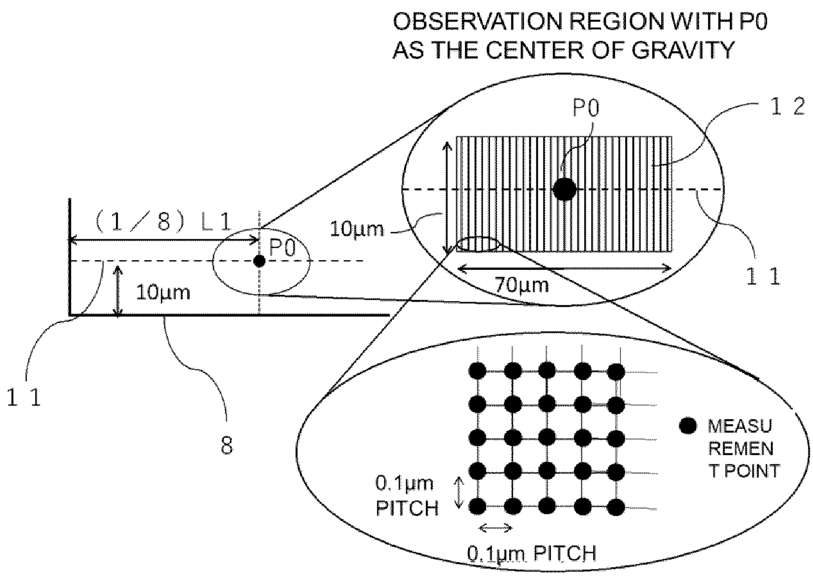
OBSERVATION REGION WITH P0
AS THE CENTER OF GRAVITY
P0
1 2
(1/8) L1
P0
10μm
1 1
10μm
70μm
1 1
8
MEASU
REMEN
T POINT
0.1μm
PITCH
0.1μm PITCH

Fig. 9

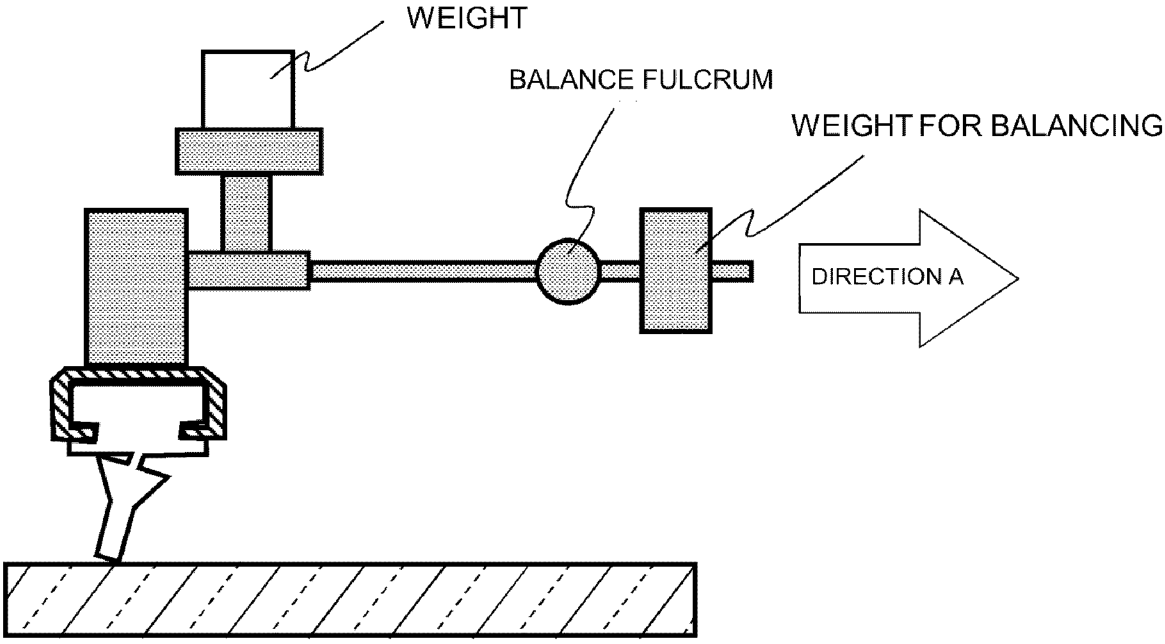


Fig. 10

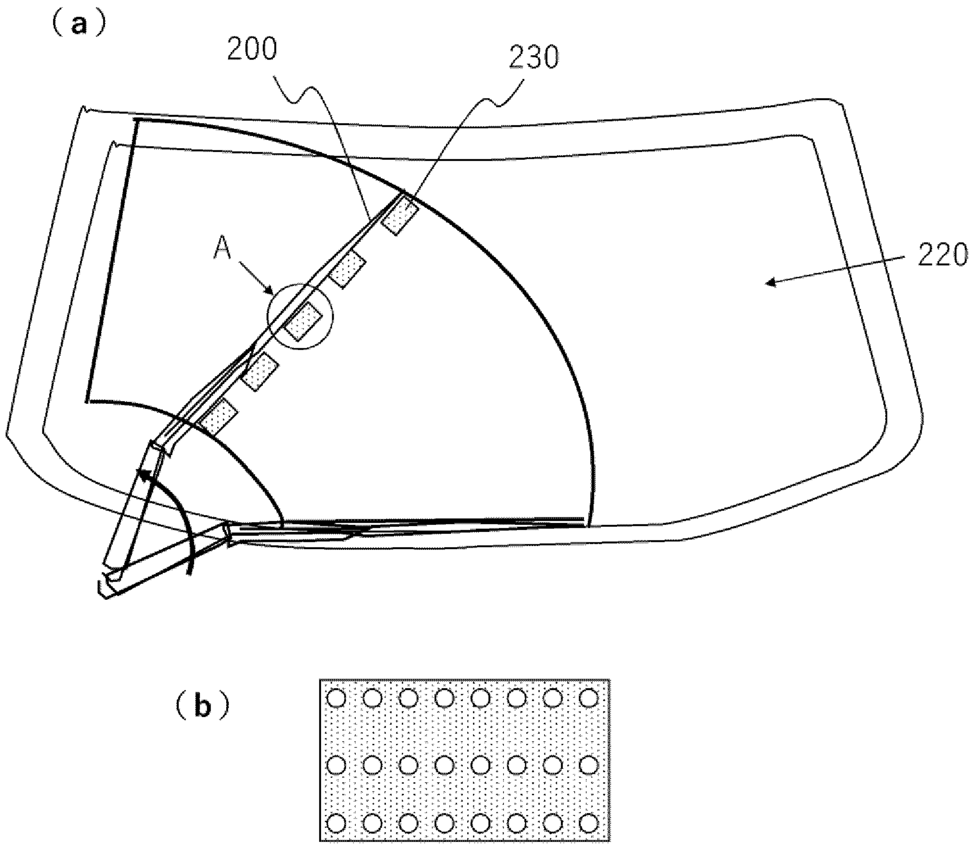


Fig 11

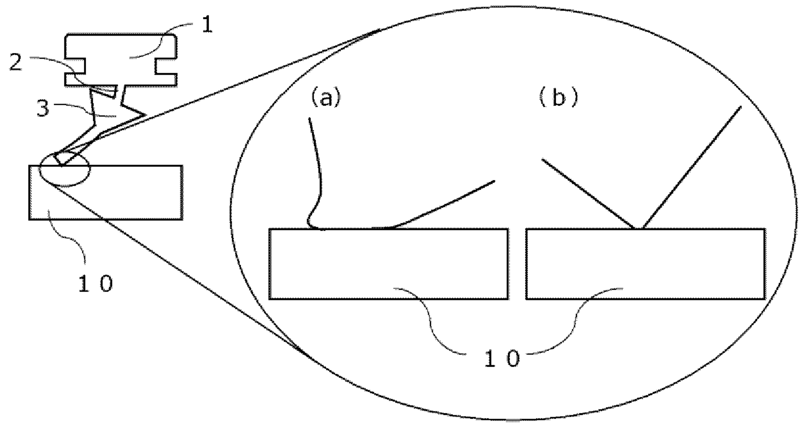


Fig. 12

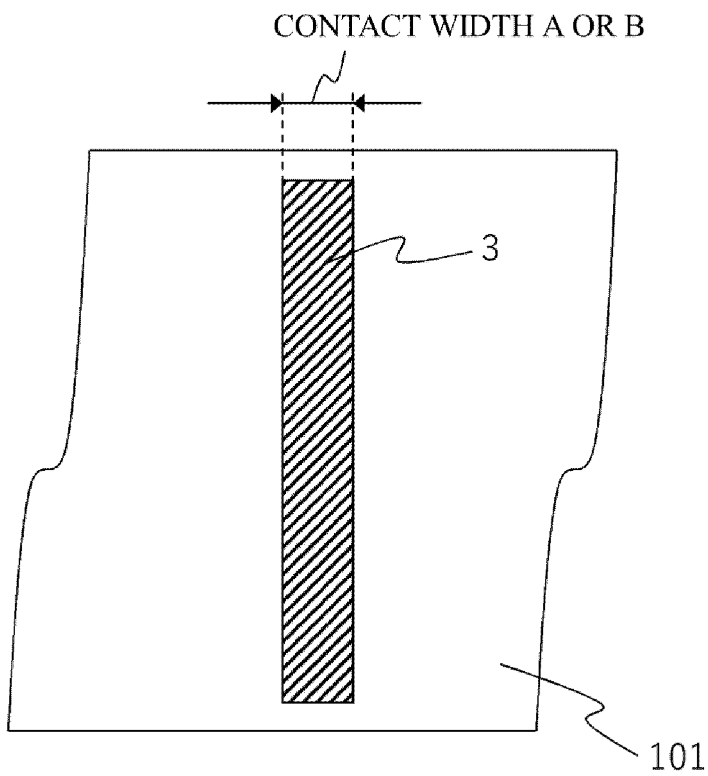


Fig. 13

**INTERNATIONAL SEARCH REPORT**

International application No.
**PCT/JP2022/047313**

**A. CLASSIFICATION OF SUBJECT MATTER**

***B60S 1/38***(2006.01)i
FI: B60S1/38 B

According to International Patent Classification (IPC) or to both national classification and IPC

**B. FIELDS SEARCHED**

Minimum documentation searched (classification system followed by classification symbols)

B60S1/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-100338 A (TOYOTA IND CORP) 02 July 2020 (2020-07-02) entire text, all drawings | 1-17 |
| A | JP 2004-243917 A (YOKOHAMA RUBBER CO LTD) 02 September 2004 (2004-09-02) entire text, all drawings | 1-17 |
| A | JP 2001-158333 A (ASMO CO LTD) 12 June 2001 (2001-06-12) entire text, all drawings | 1-17 |
| A | JP 05-077691 A (ASMO CO LTD) 30 March 1993 (1993-03-30) entire text, all drawings | 1-17 |
| A | KR 10-2020-0088188 A (KIMBLADE CO., LTD.) 22 July 2020 (2020-07-22) entire text, all drawings | 1-17 |
| A | US 5802662 A (VEAZIE, III Waldemar) 08 September 1998 (1998-09-08) entire text, all drawings | 1-17 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 March 2023** | **14 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/047313**

| Patent document cited in search report | Publication date (day/month/year) | Patent family member(s) | Publication date (day/month/year) |
|---|---|---|---|
| JP 2020-100338 A | 02 July 2020 | US 2022/0073034 A1<br>entire text, all drawings<br>WO 2020/137369 A1<br>CN 113226866 A | |
| JP 2004-243917 A | 02 September 2004 | (Family: none) | |
| JP 2001-158333 A | 12 June 2001 | (Family: none) | |
| JP 05-077691 A | 30 March 1993 | (Family: none) | |
| KR 10-2020-0088188 A | 22 July 2020 | (Family: none) | |
| US 5802662 A | 08 September 1998 | WO 1998/010965 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H07246916 B
- JP 2021210808 A
- JP 2022011862 A